# EUROPÄISCHE PATENTSCHRIFT

(11) **EP 2 695 837 B1**
(45) Veröffentlichungstag und Bekanntmachung des Hinweises auf die Patenterteilung: **07.09.2016**
(21) Anmeldenummer: 13174568.9
(22) Anmeldetag: 01.07.2013
(51) Int. Cl.: B65H 21/00, B29D 30/42, B29C 65/00

(54) **VORRICHTUNG UND VERFAHREN ZUM ÜBERLAPPSPLEISSEN VON CORDBAND**
DEVICE AND METHOD FOR OVERLAP SPLICING CORD TAPE
DISPOSITIF ET PROCÉDÉ D'ÉPISSAGE PAR CHEVAUCHEMENT D'UNE BANDE DE CORDE

(30) Priorität: 07.08.2012 DE 102012107215
(43) Veröffentlichungstag der Anmeldung: 12.02.2014
(73) Patentinhaber: Karl Eugen Fischer GmbH, 96224 Burgkunstadt (DE)
(72) Erfinder: Hoffmann, Bernd, 96224 Burgkunstadt (DE); Klenner, Ralf, 96272 Hochstadt (DE); Gesslein, Dietmar, 96257 Marktgraitz (DE); Flieger, Walter, 95326 Kulmbach (DE)
(74) Vertreter: Blaumeier, Jörg

(56) Entgegenhaltungen:
- EP-A2- 1 251 092
- DE-A1- 4 309 013
- DE-T2- 69 521 546
- DE-U1-202005 011 692
- JP-A- 2010 111 082

## Beschreibung

Die Erfindung betrifft eine Vorrichtung zum Überlappspleißen von Cordband, umfassend eine erste Fördereinrichtung zum Anfördern eines Cordbandstreifens, eine zweite Fördereinrichtung zum Abfördern des gespleißten Cordbands, sowie eine Spleißeinheit mit einer vertikal bewegbaren Spleißleiste zum überlappenden Spleißen der vorlaufenden Kante des angeförderten Cordbandstreifens an die nachlaufende Kante des abgeförderten Cordbands.

Eine Spleißvorrichtung der in Rede stehenden Art kommt vornehmlich in der Reifenindustrie zum Einsatz und dient dazu, Endlosbänder aus geschnittenem Bandstreifen, üblicherweise in Form von Stahlcordband- oder Textilcordbandstreifen, herzustellen. Die Bandabschnitte bestehen aus einem un- oder vorvulkanisierten Gummimaterial, das die Trägermatrix bildet. In dieses Gummimaterial sind häufig Textil- oder Stahlcordeinlagen integriert. Die zuvor geschnittenen Bandabschnitte werden mittels der Spleißvorrichtung beziehungsweise des vorrichtungsseitig vorgesehenen Spleißwerkzeugs in Form einer Spleißleiste im vorliegenden Fall überlappend verspleißt, also fest miteinander verbunden, was in Folge der Klebrigkeit des Gummimaterials möglich ist. Beim Überlappspleißen liegen zwei miteinander zu verbindende Kanten ein kurzes Stück übereinander, nämlich zum einen die nachlaufende Kante des zuvor bereits bearbeiteten, gespleißten Cordbandes, sowie die vorlaufende Kante des neu herangeförderten, anzuspleißenden Cordbandstreifens.

Häufig sind dabei die beiden miteinander zu verspleißenden Kanten etwas verformt, das heißt, dass die jeweilige Kante nicht geradlinig verläuft, zumeist ist eine leichte Wellenform oder Bogenform gegeben. Dadurch ergeben sich beim Überlappspleißen Probleme, da die erforderlichen Überlappspleißtoleranzen nur sehr schwer einzuhalten sind, wenn die Kanten in ihrem verformten Zustand belassen und übereinander gelegt und verspleißt werden. Denn es ergibt sich über die Länge der Spleißlinie eine abhängig von der jeweiligen Kantenverformung variierende Überlapplänge.

Um dem zu begegnen ist beispielsweise aus DE 101 19 508 C1 ein Materialführungssystem für Spleißmaschinen bekannt Die dort vorgesehene erste und zweite Fördereinrichtung besteht jeweils aus einer Mehrzahl parallel liegender einzelner Transportbänder, denen jeweils individuelle Antriebe zugeordnet sind. Der beispielsweise zuzufördernde Cordbandstreifen wird über eine solche mehrteilige Fördereinrichtung zugeführt. Jedem Transportband ist ein Kantensensor zugeordnet, die allesamt auf einer gemeinsamen Linie liegen, die parallel zur eigentlichen Spleißlinie verläuft. Alle Transportbänder laufen gemeinsam und transportieren den Cordbandstreifen, bis ein erster Sensor eine Kante detektiert. Daraufhin wird das zugeordnete Transportband gestoppt, die anderen laufen solange weiter, bis auch die ihnen zugeordneten Sensoren die Kante erfassen. Das heißt, dass letztlich über die einzelnen Transportbänder und ihre individuellen Antriebe die Kante nahezu geradlinig ausgerichtet werden kann und eine etwaige Welligkeit oder Bogenform folglich durch das quasi abschnittsweise individuelle Ziehen über die einzelnen Transportbänder ausgeglichen wird.

Ein solcher Kantenausgleich über eine derartige, aus DE 101 19 508 C1 bekannte Vorrichtung ist überall dort zweckmäßig, wo mit Cordbändern mit einer Abschnittsbreite von ca. 800 - 1000 mm gearbeitet wird, und wo der Spleißwinkel 90° +/- 20° beträgt. Je nach eingestelltem Winkel ergeben sich bei Abschnittsbreiten von 800 - 1000 mm letztlich Spleißlängen von ca. 800 - 1200 mm.

Eine Kantennivellierung mit einer solchen Vorrichtung ist jedoch dann nicht mehr möglich, wenn größere Abschnittsbreiten zu verarbeiten sind, mit Breiten bis zu 1500 mm, wie sie allgemein für sehr große Gürtelreifen benötigt werden, und wenn insbesondere der Spleißwinkel deutlich kleiner wird, beispielsweise im Bereich von 20° - 70° liegt. Denn dann ergeben sich insbesondere bei sehr kleinen Spleißwinkeln mitunter Spleißlängen von mehreren Metern, bei einer Abschnittsbreite von 1500 mm und einem kleinen Spleißwinkel können sich Spleißlängen im Bereich von 4000 - 5000 mm ergeben. Speziell im Hinblick auf diese Winkel ergeben sich mit dem aus DE 101 19 508 C1 bekannten System Probleme, als eine Kantenkorrektur nicht mehr in der gewünschten Genauigkeit möglich ist. Denn die in dem Cordbandstreifen wie auch dem verspleißten Cordband eingelegten Cordschnüre, seien es Textilschnüre, seien es Stahlschnüre, verlaufen weitestgehend parallel zur zu verspleißenden Bandkante, stehen also ebenfalls unter einem sehr kleinen Winkel relativ zur Bandlängsrichtung. Die Bandlängsrichtung fällt mit der Förderrichtung der einzelnen Transportbände gemäß der mehrteiligen, gruppierten Fördereinrichtung aus DE 101 19 508 C1 zusammen, mithin stehen also auch die Cordfäden unter dem entsprechenden Winkel relativ zur Transportrichtung des jeweiligen Transportbands. Fördert nun ein einzelnes Transportband relativ zu den benachbarten, stehenden Transportbändern, so kann das Cordband nicht folgen, da die fest in die Gummimatrix eingebundenen, extrem schräg zur Förderrichtung stehenden Fäden dem Längszug quasi dagegenhalten, also aufgrund ihrer Einbettung in die Gummimatrix einen Widerstand bilden und so das Folgen der Kante verhindern. Da die Korrekturbewegung zum Kantenausgleich nur in Längsrichtung stattfindet, jedoch die Bandkante wie auch die Fäden einem sehr kleinen Winkel zu dieser Korrekturbewegungsrichtung stehen, kann folglich die Kantenkorrektur nicht mehr hinreichend vorgenommen werden.

Eine Vorrichtung zum Stoßverbinden von bandförmigen Material, bei der die Verbindungsklauen um Horizontalachsen schwenkbar sind, ist in DE 695 21 546 T2 offenbart.

Der Erfindung liegt damit das Problem zugrunde, eine Vorrichtung zum Überlappspleißen anzugeben, die auch beim Spleißen von sehr breiten Cordbändern auch mit kleinem Spleißwinkel eine Kantenkorrektur ermöglicht.

Zur Lösung dieses Problems ist bei einer Vorrichtung der eingangs genannten Art erfindungsgemäß vorgesehen, dass die Spleißeinheit mehrere in einer Reihe angeordnete Spleißsegmente mit jeweils einem zum Fixieren einer Kante ausgebildeten Spleißleistensegment aufweist, wobei die Spleißsegmente relativ zueinander um senkrecht zur Cordbandebene stehende Schwenkachsen schwenkbar und mittels zugeordneter Stellelemente in ihrer Stellung zueinander veränderbar sind.
Bei der erfindungsgemäßen Vorrichtung kommt keine durchgehende, einteilige Spleißeinheit wie im Stand der Technik (z. B. gemäß DE 10 2005 060 200 A1) zum Einsatz. Vielmehr ist erfindungsgemäß eine segmentierte Spleißeinheit vorgesehen, bestehend aus mehreren in einer Reihe angeordneten Spleißsegmenten. Jedes Spleißsegment trägt ein Spleißleistensegment, wobei die Spleißleistensegmente in ihrer Gesamtheit wiederum die durchgehende Spleißleiste bilden, die am zu verspleißenden Material während des Spleißvorgangs angreift.

Die Spleißsegmente sind mit besonderem Vorteil relativ zueinander verschwenkbar, sind also in ihrer räumlichen Position nicht starr, sondern können in ihrer Stel-lung relativ zueinander verändert werden. Hierzu dienen entsprechende, den Spleißsegmenten zugeordnete Stellelemente, die die Spleißsegmente verschwenken.

Diese Verschwenkbarkeit ermöglicht es, ausgehend von einer in einer geraden Linie gegebenen Spleißsegmentanordnung und damit einer geradlinigen, aus den einzelnen ebenfalls in einer geraden Linie angeordneten Spleißleistensegmente gegebene Spleißleiste eine in ihrer Geometrie durch das Verschwenken geänderte Segmentanordnung zu realisieren, also ausgehend von dieser geradlinigen Anordnung die Spleißsegmente und damit auch die Spleißleistensegmente räumlich definiert zu bewegen.

Erfindungsgemäß weisen die Spleißleistensegmente Mittel zum Fixieren einer Kante auf, das heißt, dass die Kante, auf die die Spleißleistensegmente zum Spleißen oberseitig aufdrücken, an den Spleißleistensegmenten entsprechend fixiert werden können. Wird nun, ausgehend von einer geradlinigen Spleißsegment- und damit auch Spleißleistensegmentanordnung, beispielsweise die nachlaufende Kante des zuvor gespleißten Cordbandes über die Spleißleistensegmente gegriffen und fixiert, wozu selbstverständlich die zunächst geradlinige Spleißleistensegmentanordnung im Wesentlichen parallel zur Kante verläuft, so können nun zur Kompensation etwaiger geometrischer Verwerfungen im Bereich der Kante durch Ansteuern der Stellelemente die einzelnen Spleißsegmente und damit auch die Spleißleistensegmente relativ zueinander verschwenkt werden. Die Schwenkachsen stehen selbstverständlich senkrecht zur Cordbandebene, das heißt, dass die Spleißleistensegmente in der Bandebene verschwenken. Da die Spleißleistensegmente einigermaßen parallel zur Kante laufen, ergibt sich folglich während dieses Verschwenkens eine Materialbewegung des gegriffenen Cordbands im Wesentlichen senkrecht zur Kante. Das heißt, dass letztlich hierüber die Möglichkeit besteht, die Kante senkrecht zu den parallel zur Kante verlaufenden Stahl- oder Textilfäden zu ziehen, so dass die Bandkante in diesem Bereich ohne weiteres dieser Korrekturbewegung folgen kann, da auch die Fäden folgen können und keinen Widerstand mehr bilden. Das heißt, das letztlich mit der erfindungsgemäßen Vorrichtung die Kante zu Korrekturzwecken in einer Richtung senkrecht zum Kantenverlauf und damit senkrecht zum Fadenverlauf bewegt beziehungsweise gezogen wird, so dass auch bei extrem kleinen Winkeln und großen Bandbreiten die in der Gummimatrix eingebundenen Fäden keinen Widerstand mehr bilden und das Material der Korrekturbewegung ohne weiteres folgen kann. Dies ermöglicht wiederum eine sehr exakte Kantenverformung hin zu der gewünschten Geometrie.

Die Spleißleistensegmente respektive die Spleißeinheit selbst ist zweckmäßigerweise der nachlaufenden Kante zugeordnet, greift und hebt diese vor der eigentlichen Korrekturbewegung etwas an, wodurch die Korrekturbewegung ermöglicht wird. Bevorzugt ist dabei die Spleißeinheit oberhalb des Antransportbandes angeordnet, das heißt, dass die nachlaufende Kante des zuvor gespleißten Cordbands noch auf dem Antransportband ruht, über welches nach dem Anheben der nachlaufenden Kante der neue anzuspleißende Cordbandstreifen angefördert wird, so dass im Bereich des Übergangs von der ersten Fördereinrichtung zur zweiten Fördereinrichtung keine Materialübergabe erforderlich ist.

Zweckmäßigerweise sind zwei benachbarte Spleißsegmente miteinander um eine gemeinsame Schwenkachse schwenkbar verbunden. Das heißt, dass zwei Spleißsegmente unmittelbar miteinander über die gemeinsame Schwenkachse, beispielsweise in Form eines entsprechenden Achsbolzens, miteinander bewegungsgekoppelt sind.

Um über die gesamte Spleißeinheitslänge eine quasi winklige Verstellung der Spleißsegmente zueinander zu ermöglichen, also auch in Bezug auf die beiden äußersten Spleißsegmente, sind auch diese zweckmäßigerweise um jeweils eine feste Schwenkachse schwenkbar. Alternativ ist es möglich, auch diese Schwenkachsen quasi horizontal beweglich auszugestalten, so dass sie zur Korrektur ebenfalls bewegt werden können und folglich alle Schwenkachsen horizontal verschoben werden können.

Die Stellelemente, vorzugsweise in Form von Servomotoren, greifen gemäß einer besonders zweckmäßigen Weiterbildung der Erfindung jeweils zwischen zwei benachbarten Spleißsegmenten im Bereich der jeweiligen Schwenkachse, oder zusätzlich, sofern vorgesehen, auch im Bereich der äußeren beweglichen Schwenkachsen an. Das heißt, dass über ein Stellelement die jeweilige Schwenkachse linear verschoben wird, also in einer Horizontalebene verschoben wird, welcher Bewegung die beiden mit der Schwenkachse gekoppelten Spleißsegmente unmittelbar folgen. Indem das Stellelement direkt im Bereich der jeweiligen Schwenkachse, an welcher beide Spleißsegmente unmittelbar schwenkgelagert sind, angreift, folgen damit die hierüber gekoppelten Spleißsegmente unmittelbar jedweder Stellelementbewegung, so dass eine hochgenaue Winkelverstellung möglich ist.

Um dies auf einfache Weise zu realisieren ist zweckmäßigerweise zwischen jeweils zwei Spleißsegmenten ein schwenkfester erster Träger angeordnet, an dem ein die Schwenkachse, mit der die beiden benachbarten Spleißsegmente verbunden sind, aufweisender und relativ zum ersten Träger über das Stellelement horizontal linear bewegbarer zweiter Träger angeordnet ist. Über das Stellelement wird folglich eine Linearbewegung des zweiten Trägers relativ zum ersten, schwenk- respektive diesbezüglich positionsfesten Träger ermöglicht. An dem zweiten Träger befindet sich die Schwenkachse, beispielsweise ein entsprechender, vertikal stehender Achsbolzen, an dem wiederum die beiden hierüber gekoppelten Spleißsegmente über entsprechende Lageraugen oder dergleichen angeordnet sind. Bewegt sich der zweite Träger, so folgt hieraus unmittelbar eine horizontale Linearverschiebung auch der Schwenkachse und damit eine Verschwenkung der beiden gekoppelten Spleißsegmente, unterstellt, dass diese beispielsweise mit ihren beiden anderen, entfernten Enden aufgrund der gegebenen Kantengeometrie gerade nicht bewegt werden.

Es sei angenommen, dass die Spleißeinheit aus exemplarisch acht Spleißsegmenten besteht, die untereinander in der beschriebenen Weise schwenkgelagert sind, wie auch die beiden äußersten Spleißsegmente um eine feste Schwenkachse schwenkgelagert sind. So kann sich folglich, ähnlich einer mehrgliedrigen Kette, durch Verschieben der individuellen Schwenkachsen eine entsprechende, von einer geraden Anordnung abweichende leicht gewinkelte Linie ergeben, wobei die jeweiligen Winkelverstellungen nur im Bereich weniger Grad liegen, um die erforderliche Kantenausrichtung vorzunehmen. Übliche Bewegungen respektive Verschwenkungen liegen im Bereich von +/-5° und weniger, je nach Kantenverlauf mitunter auch deutlich unter 1°. Natürlich können auch mehr oder weniger als acht Spleißsegmente vorgesehen werden, je nach gewünschter "Flexibilität" der Speißeinheit.

Gemäß einer besonders vorteilhaften Weiterbildung der Erfindung ist eine Sensorik zur Erfassung der Position der nachlaufenden Kante des abgeförderten Cordbands, vorzugsweise auch der vorlaufenden Kante des angeförderten Cordbandstreifens vorgesehen, wobei eine Steuerungseinrichtung in Abhängigkeit der erfassten Positionsinformation näherungsweise den Verlauf der nachlaufenden Kante, vorzugsweise beider Kanten, ermittelt und in Abhängigkeit der Ermittlungsergebnisse die Schwenkverstellung der Spleißsegmente nach Fixieren der nachlaufenden Kante steuert. Die erfindungsgemäß vorgesehene Sensorik ermöglicht die Positionserfassung zumindest der nachlaufenden Kante und darauf gestützt die Ermittlung eines näherungsweisen Verlaufs der nachlaufenden Kante, mithin also, wie die Kante räumlich verläuft, also die mögliche grob genäherte Wellen- oder Bogenform etc. Es kann bereits ausreichend sein, nur die Position und darauf gestützt den Verlauf der nachlaufenden Kante zu ermitteln, denn diese Kante wird gegriffen und über die Schwenkverstellung der Spleißsegmente räumlich ausgerichtet. Wird diese Kante beispielsweise auf einer definierte, geradlinige Kantenform gezogen, so kann bereits eine deutliche Verbesserung des Überlapps erreicht werden, selbst wenn zur vorlaufenden Kante des Cordbandstreifens keine Geometrieinformationen vorliegen. Bevorzugt jedoch werden mittels der vorgesehenen Sensorik auch Positionsinformationen zur vorlaufenden Kante des Cordbandstreifens ermittelt, wie auch gestützt auf diese Positionsinformationen näherungsweise der räumliche Verlauf der vorlaufenden Kante, so dass im Endergebnis sowohl der zumindest ungefähre Verlauf der nachlaufenden Kante als auch der zumindest ungefähre Verlauf der vorlaufenden Kante seitens der Steuerungseinrichtung bekannt sind. Die vorlaufende Kante bleibt positionsfest auf der ersten Fördereinrichtung, während wie beschrieben die nachlaufende Kante nach Fixieren über die Spleißleistensegmente in entsprechender Weise durch Bewegen der Spleißsegmente ausgeglichen respektive, wenn bekannt, in Abhängigkeit des ermittelten räumlichen Verlaufs der vorlaufenden Kante in Bezug auf diesen Verlauf exakt ausgerichtet wird. Das heißt, dass die Stellelemente zur Verschwenkung der Spleißsegmente so angesteuert werden, dass am Ende des Ausgleichsvorgangs die nachlaufende Kante in Bezug auf die geometrische Form der vorlaufenden Kante gezogen ist und mithin sich beide über die gesamte Überlapplänge über ein konstantes Maß überdecken. Die nachlaufende Kante wird also der vorlaufenden Kante angepasst.

Als Sensorik kann beispielsweise eine zentrale Kamera verwendet werden, die kontinuierlich in schneller Folge Bilder über die gesamte Fördereinrichtungsbreite aufnimmt. Über eine zugeordnete Software mit Möglichkeit zur Kantendetektion ist es möglich, aus den Einzelbildern exakt den Verlauf der nachlaufenden Kante und gegebenenfalls auch der vorlaufenden Kante zu bestimmen. Die Fördereinrichtungen werden so gestoppt, dass die nachlaufende Kante definitiv im Bild ist. Ist die nachlaufende Kante bekannt, so kann nach Erfassen der Geometrie und Anheben über die Spleißleiste der neue Cordbandstreifen herangefördert werden, dessen vorlaufende Kante ebenfalls in das Kamerabild einläuft. Auch er kann zu gegebener Zeit gestoppt werden, wobei die exakten Kantenlagen über die Kamerabilder genauestens bestimmt werden können. Nach Ausrichtung liegt sodann ein definierter Überlapp mit homogenem Verlauf in Kantenlängsrichtung vor.

Alternativ zur Verwendung einer einzelnen Kamera ist es denkbar, dass die Sensorik mehrere einzelne, vorzugsweise optische Sensoren, die in einer Linie über die Breite der ersten Fördereinrichtung, vorzugsweise äquidistant verteilt, angeordnet sind, umfasst. Hier kommen also mehrere Einzelsensoren vor, die beispielsweise oberhalb der ersten Fördereinrichtung angeordnet sind. Läuft die vorlaufende Kante des Cordbandstreifens unterhalb der optischen Sensoren durch, so erfasst jeder Sensor in seinem Überwachungsbereich zu einem bestimmten Zeitpunkt die ein- beziehungsweise durchlaufende Kante. Es ergibt sich also eine definierte Anzahl an Sensorsignalen zu bestimmten Zeitpunkten. Da die Fördergeschwindigkeit der ersten Fördereinrichtung bekannt ist, ist der Steuerungseinrichtung folglich im Zeitpunkt des Transportstopps genau bekannt, bis wohin jeder Kantenpunkt, der über einen optischen Sensor erfasst wurde, innerhalb des Intervalls zwischen Erfassung und Transportstopp bewegt wurde. Anhand der Mehrzahl der einzelnen, über die einzelnen Sensoren erfassten Positionsinformationen kann folglich die Kantengeometrie anhand der Vielzahl der einzelnen Positionspunkte näherungsweise ermittelt werden, eine geeignete Fit-Software kann den Kantenverlauf gegebenenfalls als angefittete Kurve (Ausgleichskurve, die durch alle Positionspunkte läuft) entsprechend bestimmen.

In gleicher Weise folgt selbstverständlich, sofern vorgesehen, auch die Erfassung der Geometrie der nachlaufenden Kante. Auch diese nachlaufende Kante läuft unter den optischen Sensoren durch, jeder Sensor gibt ein bezogen auf seinen Sensorbereich bestimmtes Kantenerfassungssignal. Da auch hier die Fördereinrichtung noch weiterfördert, bis alle Sensorsignale vorliegen, ist auch hier bekannt, wie weit jeder einzelne erfasste Kantenpunkt noch bewegt wurde, so dass auch in diesem Fall eine exakte Kantenpunktschar seitens der Steuerungseinrichtung bekannt ist, gestützt auf welche sodann zumindest näherungsweise der Kantenverlauf bestimmt wird. Ausgehend von diesem erfassten Kantenverlauf erfolgt sodann die entsprechende Kantenanpassung durch Ansteuerung der Stellelemente zur Bewegung der Spleißsegmente.

Bevorzugt besteht die erste Fördereinrichtung aus mehreren parallel verlaufenden, über einen gemeinsamen Antrieb bewegten Einzelbändern, wobei entweder jedem Einzelband ein Sensor zugeordnet ist, oder wobei die Sensoren zwischen zwei Einzelbändern positioniert sind. Diese Sensoren können oberhalb der Einzelbänder angeordnet sein, sie können aber auch in die Fördereinrichtung integriert werden, wenn sie jeweils zwischen zwei Einzelbändern positioniert sind, so dass folglich eine Kantenerfassung von unten möglich ist.

Zum Verspleißen der beiden überlappenden Kanten ist es erforderlich, dass die Spleißleiste die an ihr haftende angehobene nachlaufende Kante auf die darunter befindliche, vorlaufende Kante drückt. Zu diesem Zweck wird die Spleißleiste vertikal bewegt. Um dies trotz der hier gegebenen inhärenten Beweglichkeit der Spleißeinheit über die schwenkgekoppelten Spleißsegmente auf einfache Weise segmentweise zu realisieren kann jedes Spleißsegment einen ersten Vertikalträger aufweisen, über den das Spleißsegment schwenkgelagert ist, also mit einem anderen Spleißsegment gekoppelt ist oder im Falle der äußeren Spleißsegmente an einem Festlager schwenkgelagert ist, und an dem ein das Spleißleistensegment tragender zweiter Vertikalträger über ein Stellelement vertikal bewegbar geführt ist. Der erste Träger dient also der Schwenklagerung des Spleißsegments als solchem, also sämtlicher am Spleißsegment vorgesehener Anbauteile, soweit diese nicht positionsfest sind. An diesem feststehenden ersten Träger befindet sich ein zweiter, an ihm über eine Linearführung vertikal linear bewegbarer Träger, an dem wiederum das Spleißleistensegment angeordnet ist. Über das Stellelement, das einerseits mit dem ersten, andererseits mit dem zweiten Vertikalträger bewegungsgekoppelt ist, kann der zweite Vertikalträger relativ zum ersten Vertikalträger vertikal bewegt werden und so folglich auch das Spleißleistensegment. Zum Verspleißen werden nun bevorzugt alle Spleißleistensegmente simultan über das jeweils zugeordnete Stellelement bewegt, diese simultane Schritt wird selbstverständlich über die gemeinsame Steuerungseinrichtung entsprechend gesteuert. Als Stellelemente für die Spleißleistensegmentbewegung können pneumatisch, hydraulisch oder elektrisch arbeitende Hubzylinder vorgesehen sein, wobei jeder Hubzylinder mit dem ersten und dem zweiten Vertikalträger verbunden ist. Denkbar ist es, pro Spleißsegment zwei miteinander direkt gekoppelte und hintereinander geschaltete Stellzylinder vorzusehen, wobei der erste Stellzylinder mit seinem Zylinder am ersten Vertikalträger angeordnet ist. An seiner Kolbenstange befindet sich der Zylinder des zweiten Stellzylinders, dessen Kolbenstange am zweiten Vertikalträger angeordnet ist. Wird der erste Stellzylinder bewegt, so wird der zweite Stellzylinder und mit ihm das Spleißleistensegment mitgenommen, ohne dass es einer Bewegung des zweiten Stellzylinders bedarf. Über den ersten Stellzylinder kann also z.B. ein erster Grundhub erfolgen, um die Spleißleiste z.B. aus einer weit angehobenen Position, in der z.B. das gespleißte Cordband abgefördert wird, abzusenken. Die Bewegung zum eigentlichen Greifen und Anheben der Kante und zum Verspleißen erfolgt dann über den zweiten Stellzylinder.

Die zuvor beschriebene Erfindungsausgestaltung sieht vor, jedes Spleißleistensegment separat vertikal beweglich über den zweiten Vertikalträger zu lagern und jedes Spleißleistensegment über ein separates Stellelement zu bewegen. Alternativ dazu ist es denkbar, die Spleißsegmente allesamt an einem gemeinsamen Träger, der über wenigstens ein Stellelement vertikal bewegbar ist, anzuordnen. Hier wird also die gesamte, vorher gegebenenfalls zum Kantenausgleich in eine definierte räumliche Geometrie verschwenkte Spleißsegmentmimik vertikal bewegt, damit aber auch die Spleißleistensegmente, die in diesem Fall nicht separat vertikal bewegbar innerhalb des jeweiligen Spleißsegments gelagert wären. Auch hier können als Stellelemente entsprechende pneumatisch, hydraulisch oder elektrisch arbeitende Hubzylinder vorgesehen sein, die natürlich entsprechend ausgelegt sein müssen, um den gemeinsamen Träger, der natürlich an entsprechenden Vertikalführungen gelagert ist, bewegen zu können.

Die erfindungsgemäße Spleißvorrichtung lässt wie beschrieben infolge der Verschwenkbarkeit der Spleißsegmente und damit auch der Spleißleistensegmente eine optimale Kantenkorrektur zu, nachdem die Kante vertikal zu ihrer Verlaufsrichtung bewegt beziehungsweise gezogen wird. Hierüber kann die eine Kante an die andere Kante angepasst werden, es kann also eine Geometrieanpassung erfolgen. Mitunter kommt es jedoch vor, dass zwischen dem gespleißten Cordband und dem einlaufenden Cordbandstreifen ein lateraler, also seitlicher Versatz gegeben ist. Das heißt, dass beide nicht exakt mit ihren Längskanten miteinander fluchten, sondern ein Versatz um wenige Millimeter bis Zentimeter gegeben ist. Um auch in einem solchen Fall eine optimale Ausrichtung der beiden zu verspleißenden Kanten relativ zueinander vornehmen zu können sieht eine zweckmäßige Weiterbildung der Erfindung vor, dass die Spleißeinheit an einem Tragbalken unter Beibehaltung der gegebenen räumlichen Stellung der Spleißsegmente über wenigstens ein Stellelement längsverschiebbar angeordnet ist. Die Spleißeinheit kann also horizontal längs dieses Tragbalkens, zu dem die Spleißsegmente respektive Spleißleistensegmente in der Grundstellung, wenn sie also nicht relativ zueinander verschwenkt sind, parallel läuft, bewegt werden. Diese horizontale Linearbewegung erfolgt völlig losgelöst von einer etwaigen Schwenkverstellung der Spleißsegmente. Das heißt, dass die gesamte Spleißeinheit beliebig längs des Tragbalkens verschoben werden kann, unabhängig davon, wie nun die konkrete räumliche Stellung der Spleißsegmente ist, oder ob diese gerade selbst in irgendeiner Weise über die zugeordneten Stellelemente relativ zueinander verschwenkt werden. Das heißt, dass die nachlaufende Kante folglich nicht nur quasi "in Form" gezogen werden kann, sondern auch linear und parallel zur Fadenlängsrichtung verschoben werden kann. Die Anpassung an die vorlaufende Kante des Cordbandabschnitts erfolgt folglich nicht nur hinsichtlich der Kantengeometrie, sondern auch der seitlichen Längskantenlage. Damit kann durch Verschieben der Spleißeinheit auch ein etwaiger Lateralversatz ausgeglichen werden.

Weist jedes Spleißsegment einen ersten Träger auf, der, was die Verschwenkbewegung angeht, insoweit positionsfest ist, so kann zur Ermöglichung der Linearverschieblichkeit der Spleißeinheit am Tragbalken dieser erste Träger über Linearführungen an dem Tragbalken bewegbar angeordnet sein. Das heißt, dass alle ersten Träger der Spleißsegmente über jeweilige Linearführungen längs des Tragbalkens bewegbar angeordnet sind, so dass eine gemeinsame Verschieblichkeit der gesamten Spleißeinheit möglich ist. Kommt jedoch gemäß der zuvor ebenfalls beschriebenen Ausführungsalternative ein gemeinsamer Träger vor, an dem alle Spleißsegmente angeordnet sind, und der zum Spleißen vertikal bewegt werden kann, so ist dieser gemeinsame Träger an dem Tragbalken über ein Stellelement linear beweglich angeordnet, geführt über entsprechende Linearführungen.

Um die jeweilige Position der Längskante des abgeförderten Cordbands und des angeförderten Cordbandstreifens erfassen zu können ist zweckmäßigerweise eine weitere Sensorik zur Erfassung der jeweiligen Positionsinformationen vorgesehen, wobei die Steuerungseinrichtung in Abhängigkeit der erfassten Positionsinformationen den in der Spleißstellung gegebenen Seitenversatz beider Längskanten im Bereich der zu verspleißenden Kanten ermittelt und in Abhängigkeit der Ermittlungsergebnisse die Linearverstellung der Spleißeinheit und damit der Spleißsegmente selbst nach Fixieren der nachlaufender Kante steuert. Über diese Sensorik, vorzugsweise umfassend wenigstens einen, insbesondere optisch arbeitenden, Sensor, unterhalb oder oberhalb dem die Längskante vorbeiläuft, kann folglich exakt die Längskantenposition beider Bänder ermittelt werden. Die Steuerungseinrichtung kann nun anhand beider Positionsinformationen den Seitenversatz im Bereich weniger Millimeter bis Zentimeter ermitteln und daraufhin entsprechend ermitteln, wie weit die Spleißeinheit entlang des Tragbalkens verfahren werden muss. Dabei kann, wie beschrieben, diese Verfahrbewegung und die Verschwenkbewegung der Stellelemente einander überlagert sein, so dass in einer gemeinsamen Bewegung sowohl der Seitenversatz als auch die Kantengeometrie angepasst wird. Alternativ können beide Bewegungen aber auch hintereinander erfolgen.

Wie bereits beschrieben fixieren die Spleißleistenelemente die nachlaufende Kante. Dies kann auf unterschiedliche Weise erfolgen. Entweder kann jedes Spleißleistensegment zum Fixieren der Kante mit einer Unterdruckerzeugungseinrichtung gekoppelt sein, wozu leistensegmentseitig ein entsprechender Anschluss für eine Leitung vorgesehen sein kann und über eine Vielzahl von Saugöffnungen in dem Leistensegment ein Ansaugen des Cordbands möglich ist. Hier erfolgt also die Fixierung durch Ansaugen, mithin also über einen Unterdruck. Hiermit kann sowohl Textilcord als auch Stahlcord fixiert werden. Alternativ ist es auch denkbar, dass jedes Spleißelement zum Fixieren der Kante mit wenigstens einem Magnetelement versehen ist, beispielsweise einem oder mehreren flächigen Permanentmagneten, der oder die sich über die gesamte Leistensegmentlänge erstrecken, oder einem Elektromagneten, der das Leistensegment selbst magnetisiert. Hier erfolgt die Fixierung des Cordbands also magnetisch, worüber natürlich aber nur Stahlcordband gehaltert werden kann.

Erfolgt die Fixierung durch Ansaugen, so ist zweckmäßigerweise der Tragbalken als hohler Balken ausgeführt und mit der Unterdruckerzeugungseinrichtung einerseits und andererseits über Leitungen mit jedem Spleißleistensegment verbunden. Der Tragbalken dient folglich als Verteilungsbalken für den Unterdruck respektive das Vakuum, das über wenigstens eine zentrale Pumpe erzeugt wird.

Ist der Spleißvorgang erfolgt, haben also die Spleißleistensegmente die nachlaufende Kante fest auf die vorlaufende Kante gedrückt, so dass es zur Verbindung der Gummimatrizen kommt, so wird die Spleißleiste angehoben, je nachdem, wie ihr Vertikalverstellmechanismus ist. Um zu vermeiden, dass das klebrige Gummimaterial beim Anheben der Spleißleiste mitgenommen wird ist zweckmäßigerweise an jedem Spleißleistensegment ein- oder beidseitig eine, vorzugsweise druckluftgesteuert, vertikal bewegbar angeordnete Abstreiferleiste vorgesehen. Diese vorzugsweise beiden Abstreiferleisten fahren simultan mit dem Anheben der Spleißleistensegmente etwas nach unten, drücken also letztlich das verspleißte Cordband von den Spleißleistensegmenten weg, so dass es definitiv zu einem Ablösen kommt.

Eine zweckmäßige Weiterbildung der Erfindung sieht eine Tragkonstruktion vor, die über eine Antriebseinrichtung um eine Vertikalachse zur Einstellung des Spleißwinkels der Spleißeinheit schwenkbar ist. Über diese zentrale Tragkonstruktion erfolgt folglich ein Verschwenken der kompletten Spleißeinheit relativ zu den feststehenden Fördereinrichtungen. Dies ermöglicht es, den gewünschten Spleißwinkel, der beispielsweise zwischen 20° - 90° liegen kann, durch entsprechendes Verschwenken um eine Vertikalachse einstellen zu können. Über diese Verschwenkung kann aber auch eine, gegebenenfalls dritte, Korrekturbewegung vorgenommen werden, zusätzlich zur Verschwenkung der Spleißsegmente und gegebenenfalls zur Linearverschiebung der gesamten Spleißeinheit zum Ausgleich des Seitenversatzes. Denn wenn die beiden Verläufe der zu verspleißenden Kanten zumindest näherungsweise ermittelt sind, kann durch Verschwenken der Spleißeinheit um ein sehr geringes Winkelinkrement die bereits fixierte nachlaufende Kante allein durch diese Schwenkbewegung schon etwas in Bezug auf die vorlaufende Cordbandstreifenkante ausgerichtet werden. Da aufgrund der Positionserfassung der nachlaufenden Kante die entsprechenden Kantenpunkte in ihrer räumlichen Lage bekannt sind, kann auch diese Verschwenkbewegung steuerungseinrichtungsseitig komplett nachvollzogen werden, d. h., dass auch nach dieser kurzen Verschwenkbewegung die entsprechende Raumlage der nachlaufenden Kante bekannt ist. Ausgehend hiervon kann sodann die entsprechende Spleißsegmentverschwenkung und gegebenenfalls Spleißeinheitsverschiebung erfolgen. Grundsätzlich erfolgt aber natürlich auch diese Bewegung simultan zu der oder den beiden anderen Bewegungen, so dass letztendlich eine einheitliche Korrekturbewegung, resultierend aus maximal drei überlagerten Einzelbewegungen, erfolgt.

Um die erfindungsgemäße Spleißvorrichtung neben dem Überlappspleißen auch zum Stumpfspleißen einzurichten ist zweckmäßigerweise eine längs zweier zu verspleißender Kanten verfahrbare Stumpfspleißeinrichtung vorgesehen, wobei die Spleißeinheit und die Stumpfspleißeinrichtung gemeinsam horizontal verfahrbar sind, derart, dass sie wechselweise von einer Ruhestellung in eine Arbeitsstellung, in der der Spleißbetrieb erfolgt, bringbar sind. Für den Fall, dass mittels der erfindungsgemäßen Vorrichtung, die grundsätzlich zum Überlappspleißen ausgelegt ist, auch einmal ein Stumpfspleißen erfolgen soll, besteht die Möglichkeit, die Überlappspleißeinheit aus ihrer Arbeitsstellung in eine Ruhestellung zu bewegen, und gleichzeitig dazu eine Stumpfspleißeinrichtung aus der Ruhestellung in die Arbeitsstellung zu bringen. Dies geschieht zweckmäßigerweise über eine Horizontalbewegung, wozu die Tragkonstruktion einen zentralen Horizontalträger und zwei Vertikalträger aufweist, wobei der Horizontalträger auf den beiden Vertikalträgern horizontal bewegbar angeordnet ist. D. h., dass der Horizontalträger, an dem die Spleißeinheit und die Stumpfspleißeinrichtung angeordnet sind respektive in irgendeiner Form gekoppelt sind, durch Horizontalverschiebung dieses Horizontalträgers in die entsprechende Position gebracht werden können.

Eine Stumpfspleißeinrichtung umfasst üblicherweise zwei längs der zu verspleißenden Kanten verfahrbare, auf diese drückende Kegelräder, wie beispielsweise aus DE 10 2005 060 200 A1 bekannt. Es bedarf also zum Verspleißen einer Linearbewegung dieser Kegelräder. Dies kann erfindungsgemäß dadurch realisiert sein, dass die Stumpfspleißeinrichtung horizontal verfahrbar an dem Horizontalträger oder einer parallel zu diesem verlaufenden Führungsschiene angeordnet ist. Die Stumpfspleißeinrichtung kann aus zwei Spleißköpfen bestehen, die jeweils separat und jeweils über die halbe Spleißlänge verfahrbar sind.

Die Spleißeinheit selbst kann über ein oder mehrere Stellelemente relativ zum Horizontalträger vertikal bewegbar sein, d. h., sie wird etwas angehoben, wenn die Stumpfspleißeinrichtung eingefahren werden soll, wozu entsprechende Hubzylinder oder Ähnliches dienen.

Wie bereits beschrieben ist es besonders vorteilhaft, wenn die Spleißeinheit, gegebenenfalls auch die Stumpfspleißeinheit, in der den Spleißer wirkenden Arbeitsposition oberhalb der ersten Fördereinrichtung angeordnet sind, da dann der Spleißvorgang auf der ersten Fördereinrichtung erfolgt und es nicht erforderlich ist, den anzuspleißenden Cordbandstreifen auf das Förderband zwecks des Spleißes zu übergeben.

Neben der Vorrichtung betrifft die Erfindung ferner ein Verfahren zum Überlappspleißen von Cordband, bei dem unter Verwendung einer Vorrichtung der zuvor beschriebenen Art mittels einer Spleißleiste ein nachlaufende Kante eines gespleißten Cordbands, die über eine vorlaufende Kante des abgeförderten Cordbandstreifens gelegt ist, an die vorlaufende Kante gespleißt wird.

In Weiterbildung des Verfahrens kann zumindest näherungsweise der geometrische Verlauf der nachlaufenden Kante und der vorlaufenden Kante sowie ihrer Relativposition zueinander und die Lage der beiden Längskanten bestimmt werden, wonach die Steuerungseinrichtung die die Verschwenkung der Spleißsegmente erwirkenden Stellelemente und das die Linearverschiebung der Spleißsegmente erwirkende Stellelement derart ansteuert, dass die an den Spleißleistensegmenten fixierte nachlaufende Kante unter Ausgleich eines etwaigen gegebenen axialen und lateralen Versatzes in einer Überlappposition gebracht wird, in der über die Kantenlänge ein weitgehend gleicher Überlapp gegeben ist, wonach das Verspleißen erfolgt. Nach Durchführung dieses Spleißvorgangs schaltet beispielsweise das die Kante fixierende Vakuum ab, die Spleißleiste respektive Leistensegmente werden hochgefahren und gegebenenfalls der oder die Abstreiferleisten abgesenkt, falls das Band noch anklebt. Im Falle einer Magnetfixierung des Stahlcordbands sind solche Abstreiferleisten unbedingt vorzusehen, unabhängig davon, ob die Magnetfixierung über Permanentmagneten oder Elektromagneten erfolgt.

Nach Durchführung des Spleißes kehren sämtliche beweglichen Baugruppen wieder in die Grundstellung zurück, d. h., dass die Spleißeinheit als solche, sollte sie am Tragbalken verschoben worden sein, in eine Grundposition zurückfährt, wie auch sämtliche Segmente, sollten sie verschoben worden sein, in eine Grundstellung mit geradliniger Anordnung zurückfahren, auch die Spleißleistensegmente sind in eine angehobene Grundstellung zurückgeführt. Es erfolgt also eine Rückstellung aller verstellter Winkel bzw. Linearverschiebungen.

Weiterhin ist es denkbar, dass anhand der ermittelten geometrischen Verläufe der Kanten zunächst eine erste Lageanpassung durch Verschwenken der gesamten Spleißeinheit über die Antriebseinrichtung um ein verlaufsabhängig bestimmtes Winkelinkrement erfolgt, wonach die Stellelemente im Rahmen einer zweiten Lageanpassung angesteuert werden. Es werden also anhand der Positionsinformationen, die von der Sensorik zu den Kanten geliefert werden, virtuelle Kantenlinien ermittelt, und damit zwei Bezugslinien zur vorlaufenden und nachlaufenden Kante, woraufhin die gesamte Spleißeinheit entsprechend verschwenkt wird, um eine Grobanpassung der virtuellen Kantenlinie respektive Bezugslinie der nachlaufenden Kante an die entsprechende Linie der vorlaufenden Kante vorzunehmen.

Besonders zweckmäßig ist es, wenn sämtliche Bewegungen zur Lageanpassung synchron erfolgen. D. h., die Steuerungseinrichtung errechnet alle Steuerparameter und die Einzelbewegungen und Zielpositionen, in die die entsprechenden Stellelemente die zugeordneten beweglichen Teile bringen sollen, um dann gegebenenfalls alle drei Bewegungen zu überlagern, so dass ausgehend von einer im Startzeitpunkt gegebenen Situation durch eine einmalige Bewegung die korrekte Spleißposition eingenommen wird.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Prinzipdarstellung einer erfindungsgemäßen Spleißeinrichtung,
- Fig. 2: eine Frontansicht der Spleißeinrichtung aus Fig. 1 unter Darstellung der relevanten Komponenten,
- Fig. 3: eine Seitenansicht dazu,
- Fig. 4: eine vergrößerte Detailansicht des Details IV aus Fig. 2,
- Fig. 5: eine Teilansicht aus Fig. 4 mit Blick von unten auf die Spleißleistensegmente und die Spleißsegmente,
- Fig. 6: eine Schnittansicht in Richtung der Linie VI - VI in Fig. 4, wobei lediglich die relevanten Komponenten gezeigt sind,
- Fig. 7: eine Schnittansicht in Richtung der Linie VII - VII aus Fig. 4, wobei lediglich die relevanten Komponenten gezeigt sind,
- Fig. 8: eine Schnittansicht in Richtung der Linie VIII - VIII aus Fig. 4, wobei lediglich die relevanten Komponenten gezeigt sind,
- Fig. 9a - 9c bis 17a - 17c: jeweils als Prinzipdarstellungen eine Seitenansicht (a), eine Aufsicht (b) und eine Kantenlagenansicht (c) zu insgesamt neun einzelnen Arbeitsschritten der erfindungsgemäßen Spleißeinrichtung,
- Fig. 18: eine Seitenansicht der Spleißeinrichtung in der Arbeitsstellung "Überlappspleißen",

- Fig. 19: eine Seitenansicht der Spleißeinrichtung in der Arbeitsstellung "Stumpfspleißen",
- Fig. 20: eine Prinzipdarstellung eines Maschinenlayouts unter Verwendung einer erfindungsgemäßen Spleißeinrichtung, gemäß einer ersten Ausgestaltungsform, und
- Fig. 21: eine Prinzipdarstellung eines Maschinenlayouts unter Verwendung einer erfindungsgemäßen Spleißeinrichtung, gemäß einer zweiten Ausführungsform.

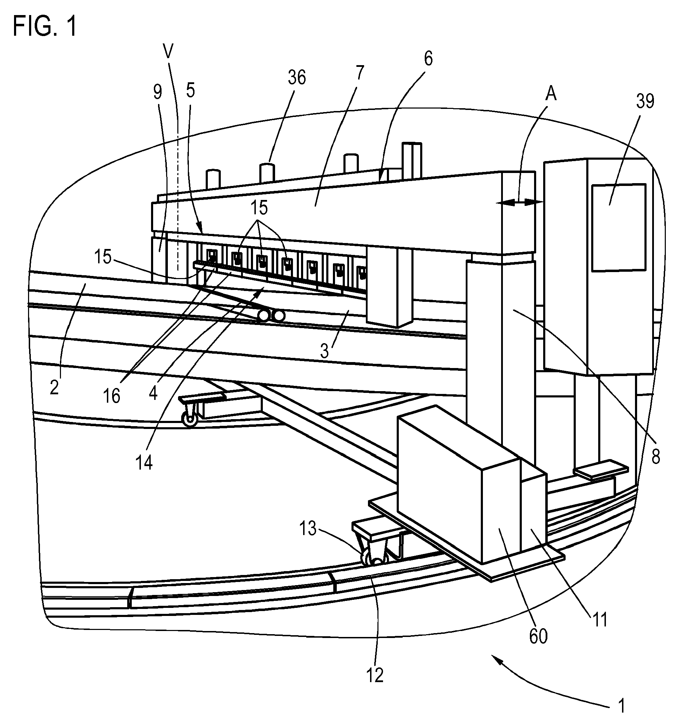

Fig. 1 zeigt in Form einer Prinzipdarstellung eine erfindungsgemäße Spleißvorrichtung 1, die grundsätzlich dem Überlappspleißen dient, aber auch zum Stumpfspleißen verwendet werden kann, worauf nachfolgend noch eingegangen wird.

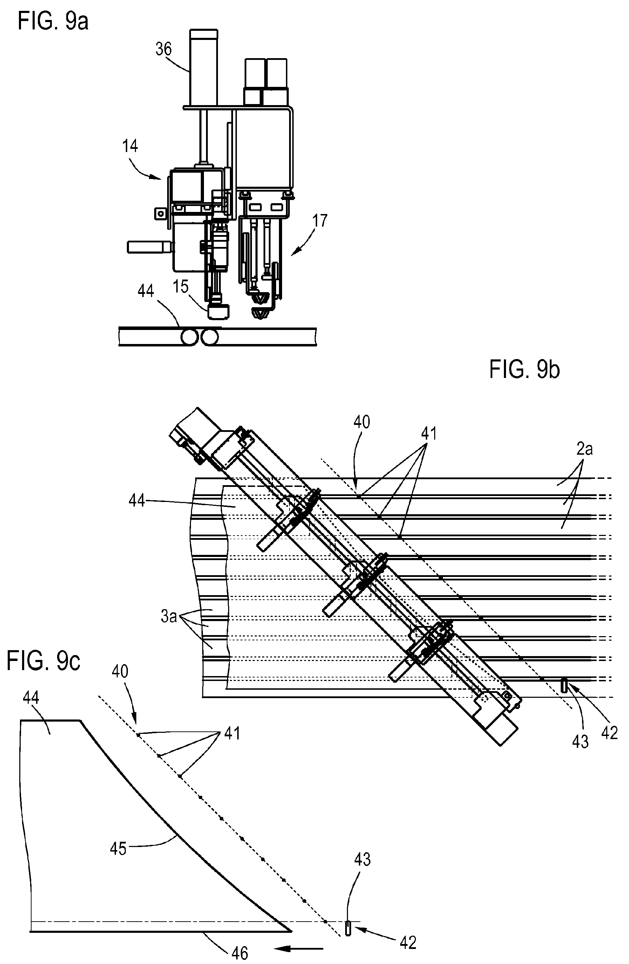

Vorgesehen ist eine erste Fördereinrichtung 2 zum Anfördern eines Cordbandstreifens sowie eine zweite Fördereinrichtung 3 zum Abfördern eines gespleißten Cordbandes. Jede Fördereinrichtung 2, 3 besteht bevorzugt aus mehreren einzelnen Transportbändern 2a bzw. 3a (siehe hierzu exemplarisch Fig. 9b), die jeweils unterschiedlich weit laufen, so dass sich insgesamt eine schräg verlaufende Übergangszone 4 ausbildet, wo beide Fördereinrichtungen 2, 3 aneinander angrenzen. Die einzelnen Transportbänder 2a, 3a werden jeweils durch einen gemeinsamen Antrieb angetrieben, laufen also alle von der Geschwindigkeit her synchron. Durch Verändern der Position der einzelnen Umlenkrollen, über die die einzelnen Transportbänder 2a, 3a in der Übergangszone 4 geführt sind, z.B. durch Linearverschieben der Umlenkrollen, kann diese Übergangszone quasi im Winkel verändert werden, um sie dem Spleißwinkel, der, wie nachfolgend noch beschrieben wird, durch Verschwenken einer Tragkonstruktion verstellt werden kann, anzupassen, so dass die Übergangszone stets im wesentlichen parallel zur Spleißeinheit ist.

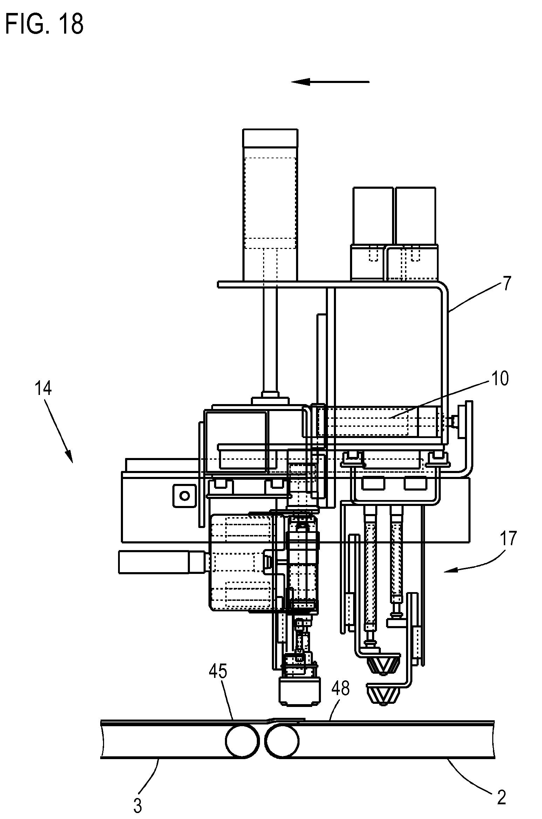

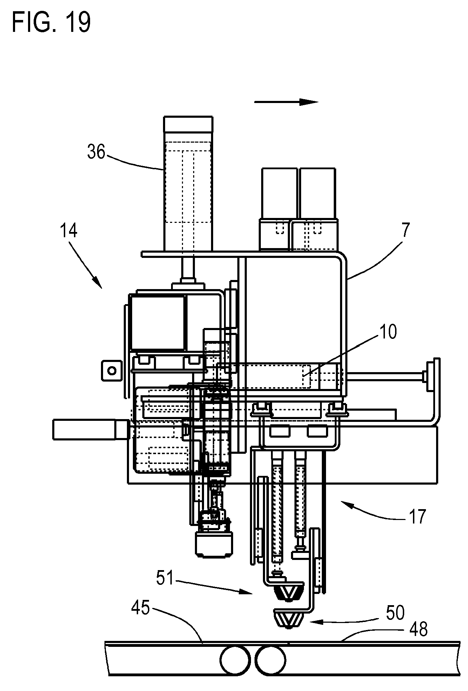

Vorgesehen ist ferner eine Spleißeinheit 5, die als solche insgesamt an einer Tragkonstruktion 6 angeordnet ist, umfassend einen zentralen Horizontalträger 7, der auf zwei seitlichen Vertikalträgern 8, 9 horizontal verschiebbar (siehe Doppelpfeil A) angeordnet ist. Der Horizontalverschiebung, die zum Ein- und Ausfahren einer Überlappspleißeinheit respektive Ein- und Ausfahren einer Stumpfspleißeinrichtung dient, dient ein oder dienen mehrere Stellelemente 10 in Form von pneumatischen, hydraulischen oder elektrisch arbeitenden Stellzylindern (siehe Fig. 18, 19).

Die Tragkonstruktion 6 als solche ist um eine Vertikalachse V im Bereich des Vertikalträgers 9 schwenkbar. Die Verschwenkung erfolgt über einen hier nur schematisch gezeigten Antriebsmotor 11, der ein Ritzel antreibt, das mit einem bogenförmigen Zahnkranz 12 kämmt. Die Tragkonstruktion ist bodenseitig auf Rollen 13 geführt, so dass sie insgesamt um die Vertikalachse V verschwenkt werden kann.

In der Tragkonstruktion 6 befindet sich eine Spleißeinheit 14, die mitsamt der Tragkonstruktion um die Vertikalachse V verschwenkt werden kann. Diese Spleißeinheit besteht aus mehreren Spleißsegmenten 15, auf deren Aufbau, Lagerung und Funktion nachfolgend noch näher eingegangen werden wird.

Jedes Spleißsegment 15 weist ein Spleißleistensegment 16 auf, wobei die Spleißleistensegmente 16 in ihrer Gesamtheit die Spleißleiste bilden, über die die Kantenverspleißung erfolgt. Die Spleißleistensegmente 16 können vertikal abgesenkt und angehoben werden, je nach Bedarf während des Betriebs.

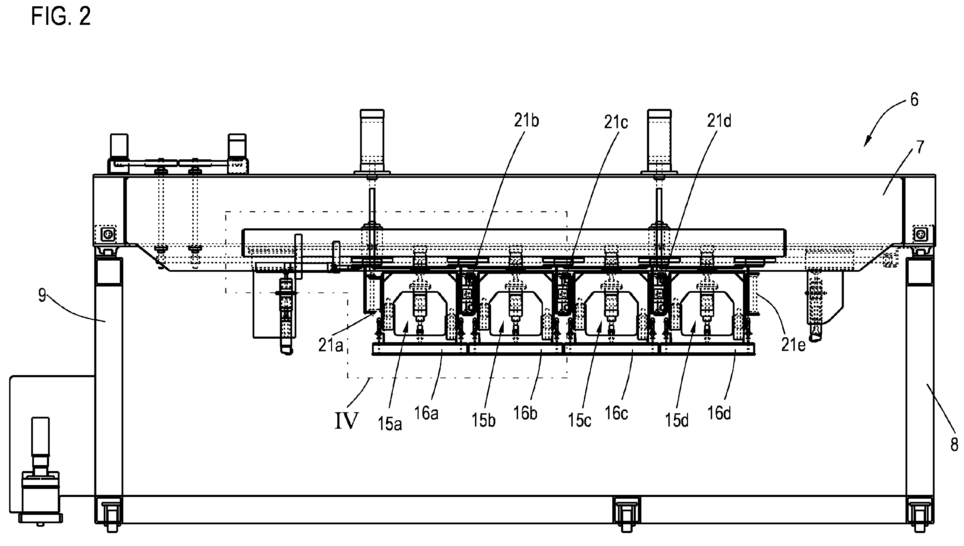

In Fig. 2 ist eine Frontansicht der Vorrichtung 1 aus Fig. 1 gezeigt, wobei die Fördereinrichtungen und sonstige Anbauteile, die nicht von Belang sind, der Übersichtlichkeit halber weggelassen sind. Gezeigt sind auch nur vier Spleißsegmente 15a, 15b, 15c, 15d, mit jeweils einem Spleißleistensegment 16a, 16b, 16c und 16d. Selbstverständlich können auch wesentlich mehr als vier derartiger Spleißsegmente vorgesehen sein, beispielsweise sechs oder acht, je nachdem, wie feingliedrig die Spleißeinheit ausgelegt werden soll respektive wie lang etwaige Spleißlinien sind.

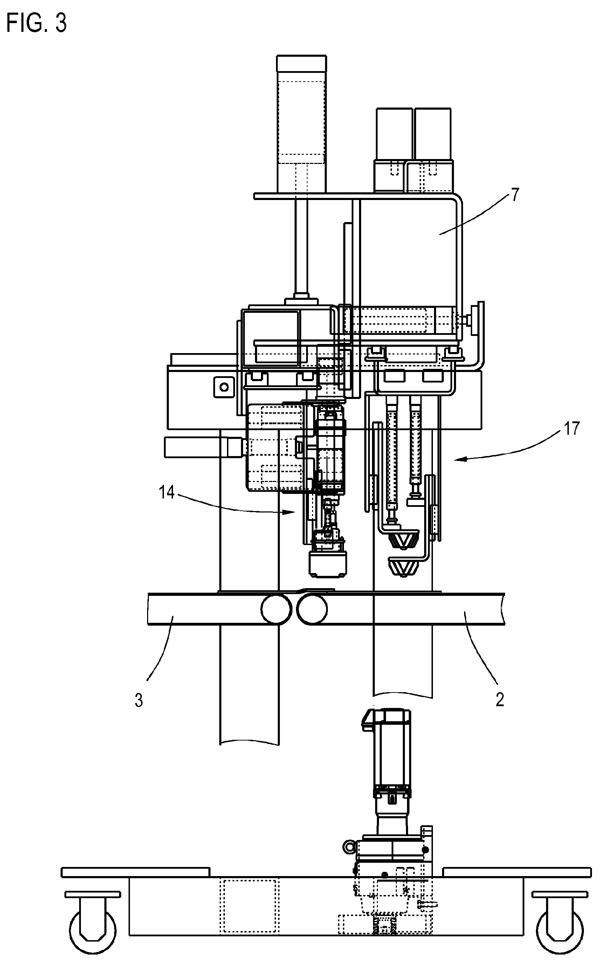

Aus Fig. 2 ist ferner die Tragkonstruktion 6 zu erkennen, umfassend den Horizontalträger 7 sowie die beiden Vertikalträger 8, 9. In Fig. 3, die eine Seitenansicht zeigt, sind die beiden Fördereinrichtungen 2, 3 ausschnittsweise zu sehen, wie auch eine Stumpfspleißeinrichtung 17 gezeigt ist, die, worauf nachfolgend noch eingegangen wird, bei Bedarf zum Spleißen verwendet werden kann.

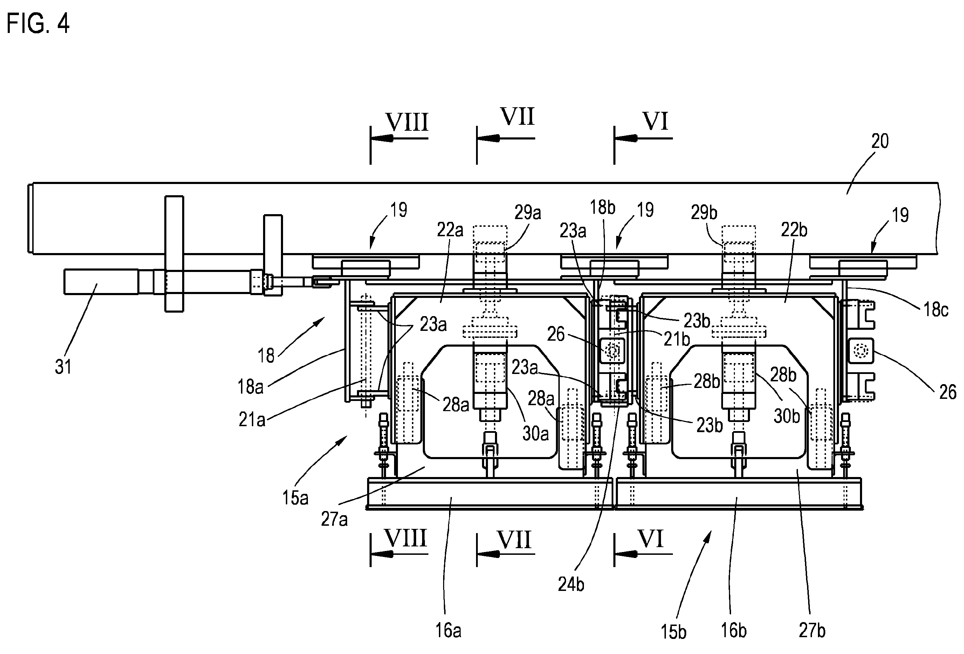

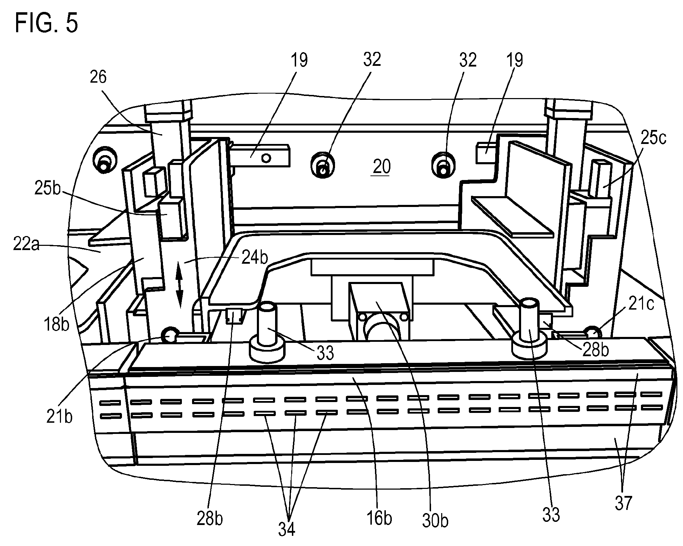

Die Fig. 4 und 5 zeigen in vergrößerter Darstellung einen Ausschnitt aus Fig. 2. Gezeigt sind die beiden Spleißsegmente 15a und 15b. Während Fig. 4 eine Vorderseitenansicht zeigt, zeigt Fig. 5 eine Ansicht von unten.

Die Spleißeinheit umfasst zum einen erste Träger 18, die jeweils über Linearführungen 19 an einem hohlen Tragbalken 20 linear längs dieses Tragbalkens 20 bewegbar sind. Dieser Tragbalken 20 dient der Verteilung eines anzulegenden Vakuums, worauf nachfolgend noch eingegangen wird.

Das erste, randseitige Spleißsegment 15a ist an dem ersten Träger 18a unmittelbar schwenkgelagert. Zu diesem Zweck ist eine Schwenkachse 21 a in Form eine Achsbolzens vorgesehen, der entsprechende Lageraugen am ersten Träger 18a und Lageraugen 23a an einem U-förmigen Vertikalträger 22a des Spleißsegments 15a durchgreift. D. h., dass das Spleißsegment 15a um die über den Achsbolzen gebildete Schwenkachse 21 a verschwenkt werden kann. Alternativ ist es denkbar, die Schwenkachse 21 a auch horizontal linear beweglich zu lagern, so dass die mittels eines zugeordneten Stellelements verschoben werden kann.

Das erste Spleißsegment 15a ist mit dem benachbarten zweiten Spleißsegment 15b wiederum schwenkbeweglich verbunden. Hierzu sind am Vertikalträger 22 a wiederum zwei seitliche Lageraugen 23a vorgesehen, durch die ein weiterer Achsbolzen, der eine Schwenkachse 21 b bildet, durchgreift. Auf diesem Achsbolzen sitzt ferner ein Vertikalträger 22b des Spleißsegment 15b, der ebenfalls zwei Lageraugen 23b aufweist, die von der Schwenkachse 21 b durchgriffen sind. Die Schwenkachse 21 b ihrerseits ist an einem zweiten Träger 24b befestigt, der über eine Linearführung 25b horizontal verschiebbar mit dem ersten, positionsfesten Träger 18b verbunden ist. Der Linearführung 25b zugeordnet ist ein Stellelement 26 in Form eines Servomotors. Über diesen Servomotor ist es nun möglich, den zweiten Träger 24b linear und horizontal relativ zum positionsfesten ersten Träger 18b zu bewegen. Nachdem die Schwenkachse 21 b fest mit dem zweiten Träger 24b verbunden ist, wird folglich auch diese Schwenkachse 21 b horizontal verschoben. Da mit dieser Schwenkachse 21 b auch die beiden Vertikalträger 22a und 22b der beiden Spleißsegmente 15a und 15b unmittelbar über deren jeweilige Lageraugen verbunden sind, werden folglich auch die beiden Spleißsegmente 15a, 15b relativ zueinander verschwenkt, abhängig von der Stellbewegung des Stellelements 26.

In eben dieser beschriebenen Weise sind auch die beiden Spleißsegmente 15b und 15c und 15c und 15d miteinander schwenkverbunden, wie das Spleißsegment 15d mit seinem rechten Ende in der Weise, wie bezüglich des linken Endes zum Spleißsegment 15a beschrieben, um eine entsprechende, positionsfeste Schwenkachse 21e schwenkgelagert ist. Die jeweiligen Stellelemente 26 greifen jeweils im Bereich der Schwenkachse 21 b, 21 c, 21 d (siehe Fig. 2) an, verschieben also jeweils die Schwenkachse über den jeweils zweiten Träger 24b, 24c, 24d. Hieraus resultiert folglich, dass die Spleißsegmente 15a - 15d relativ zueinander verkippen können, mithin also ihre Relativposition zueinander ändern können, ähnlich wie dies bei Kettengliedern möglich ist. Sind zusätzlich auch die beiden Schwenkachsen 21 a und 21e horizontal beweglich, so ist auch ihnen jeweils ein Stellelement zugeordnet.

Wie die Fig. 4 und 5 ferner zeigen, sind die Spleißleistensegmente 16a, 16b jeweils an einem zweiten Vertikalträger 27a, 27b angeordnet, entsprechendes gilt natürlich auch bezüglich aller andere Spleißsegmente. Dieser zweite Vertikalträger 27a, 27b ist über jeweils zwei Linearführungen 28a, 28b mit dem ersten Vertikalträger 22a bzw. 22b verbunden, kann also relativ zu dem - vertikal gesehen - positionsfesten ersten Vertikalträger 22a, 22b vertikal nach oben und unten bewegt werden, und mit ihm das zugehörige Spleißleistensegment. Für diese Bewegung sind jeweils zwei einander nachgeschaltete Stellelemente 29a, 30a bzw. 29b, 30b vorgesehen, die jeweils ebenfalls als pneumatische oder hydraulische Zylinder ausgeführt sind. Der jeweilige Zylinder 30a, 30b wird bzw. hängt unmittelbar am Kolben des darüber befindlichen ersten Zylinders 29a, 29b. Wird der Zylinder 29a, 29b bewegt, so wird einerseits der zugehörige Zylinder 30a, 30b nach unten bewegt. Nachdem dieser aber mit der Spleißleistensegment 16a, 16b verbunden ist, wird darüber auch dieses nach unten bewegt, jeweils geführt über die Linearführungen 28a, 28b. Eine zweite Stellbewegung kann allein durch den jeweiligen Zylinder 30a, 30b erfolgen, der die Spleißleistensegmente 16a, 16b individuell nochmals vertikal bewegen kann. Diese Bewegung über den Zylinder 30a bzw. 30b erfolgt, wenn die Kante gegriffen werden und etwas zum Unterfahren mit der vorlaufenden Kante des anzuspleißenden Bandes angehoben wird bzw. zum Spleißen dann abgesenkt wird. Um das gespleißte Cordband herauszufördern, wird die jeweilige segmentspezifische Mimik über den ersten Zylinder 29a, 29b deutlich weiter nach oben gezogen.

Selbstverständlich weist jedes Spleißsegment 15a - 15d eine solche DoppelZylinder-Konstruktion auf, wie natürlich auch jedes Spleißsegment einen ersten Vertikalträger und einen zweiten Vertikalträger, an dem das jeweilige Spleißleistensegment angeordnet ist, aufweist.

Wie Fig. 4 schließlich zeigt, ist ein weiteres Stellelement 31 vorgesehen, das an dem Tragbalken 20 abgestützt ist. Es ist im gezeigten Beispiel mit dem ersten Träger 18a verbunden. Dieses Stellelement 31, beispielsweis wiederum ein Servomotor, kann die gesamte Spleißeinheit bestehend aus den Spleißsegmenten 15a - 15d längs des Tragbalkens 20, geführt über die Linearführungen 19, an denen die einzelnen ersten Träger 18a - 18d hängen, verschieben. D. h., dass die gesamte Segmentkombination linear verschoben werden kann, wobei diese Linearverschiebung immer möglich ist, unabhängig davon, wie nun die einzelnen Spleißsegmente 15a - 15d relativ zueinander verschwenkt sind, oder wie die Spleißleistensegmentposition ist.

D. h., dass innerhalb dieser Spleißeinheit 14 insgesamt drei Beweglichkeiten gegeben sind. Die erste Beweglichkeit ist die der gesamten Spleißeinheit längs des Tragbalkens 20. Die zweite Beweglichkeit ist die um die jeweiligen Vertikalachsen, gebildet durch die Schwenkachsen 21 a - 21 e, die dritte Beweglichkeit ist die Vertikalbeweglichkeit des jeweiligen Spleißleisten 16 - 16d. Als letztlich vierte Beweglichkeit ist noch die Verschwenkung über die komplette Tragkonstruktion 6 zu nennen.

Wie Fig. 5 zeigt, sind an der Unterseite des Tragbalkens 20 erste Anschlüsse 32 und an den Spleißleistensegmenten zweite Anschlüsse 33 vorgesehen. Diese sind über entsprechende Leitungen zu verbinden und dienen dazu, Luft durch die Spleißleistensegmente zu saugen, wozu diese an ihrer Unterseite eine Vielzahl von Absaugschlitzen 34 aufweisen. Der Tragbalken 20 ist mit einer zentralen Unterdruckerzeugungseinrichtung 60 in Form einer Pumpe gekoppelt, die Luft aus ihm absaugt. Sind die Leitungsverbindungen gelegt, so wird im Endeffekt über die Spleißleistensegmente Luft abgesaugt. Über geeignete Ventile sind die einzelnen Leitungen zu- oder abschaltbar. Wird ein Spleißleistensegment nun auf ein zu spleißendes Cordband aufgesetzt, so wird dieses angesaugt, wird also daran fixiert. Dies ist vorliegend wichtig, als hierüber zum einen das Anheben des Cordbandes im Kantenbereich erfolgt, zum anderen auch das Verziehen desselben.

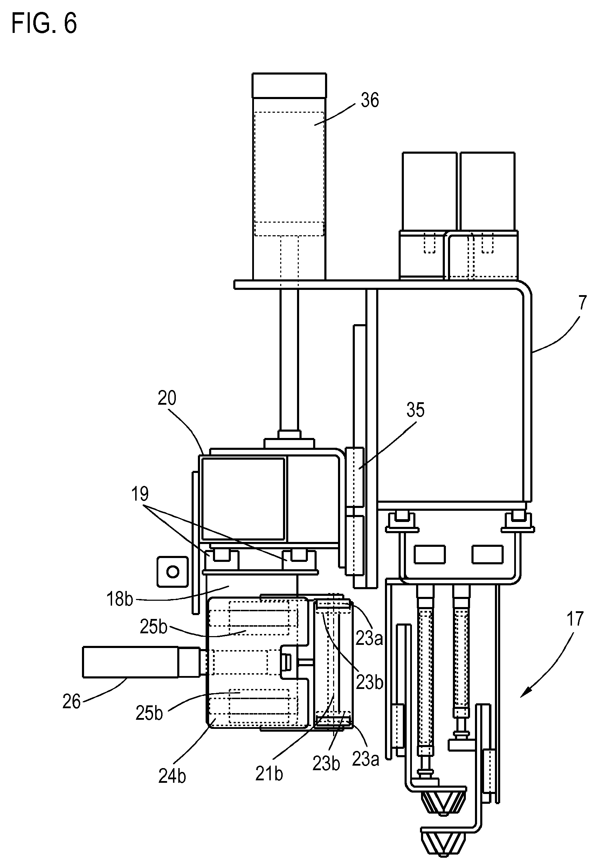

Die Fig. 6 - 8 zeigen drei Schnittansichten gemäß den Linien VI - VI, VII - VII und VIII - VIII gemäß Fig. 4.

Fig. 6 zeigt hierbei detaillierter den sich ergebenden Aufbau im Bereich einer Schwenkverbindung, hier zwischen den beiden Spleißsegementen 15a und 15b. Gezeigt ist zum einen der hohle Tragbalken 20, der erste Träger 18b sowie die hier doppelt vorgesehenen Linearführungen 19. Gezeigt ist ferner das Stellelement 26 in Form des Servomotors sowie der zweite Träger 24b und die an ihm über den Achsbolzen realisierte Schwenkachse 21 b, auf der wiederum die Lageraugen 23a sowie 23b angeordnet sind. Gezeigt sind ferner die hier ebenfalls doppelt vorgesehenen Linearführungen 25b, über die der zweite Träger 24b horizontal verschiebbar am ersten Träger 18b angeordnet ist.

Gezeigt ist des Weiteren, dass der Tragbalken 20 über eine Verbindungskonstruktion mehrere Linearführungen 35, von denen in horizontaler Abfolge mehrere vorgesehen sind, vertikal beweglich am Horizontalträger 7 angeordnet ist. Über mehrere weitere Stellelemente 36 kann der Tragbalken 20 und mit ihm die gesamte Spleißeinheit 14 umfassend sämtliche Spleißsegmente 15a - d etc. vertikal bewegt werden. Hierüber kann, wenn die in Fig. 6 ebenfalls gezeigte Stumpfspleißeinrichtung 17 benutzt werden soll, die Überlappspleißeinheit 14 vertikal nach oben bewegt werden.

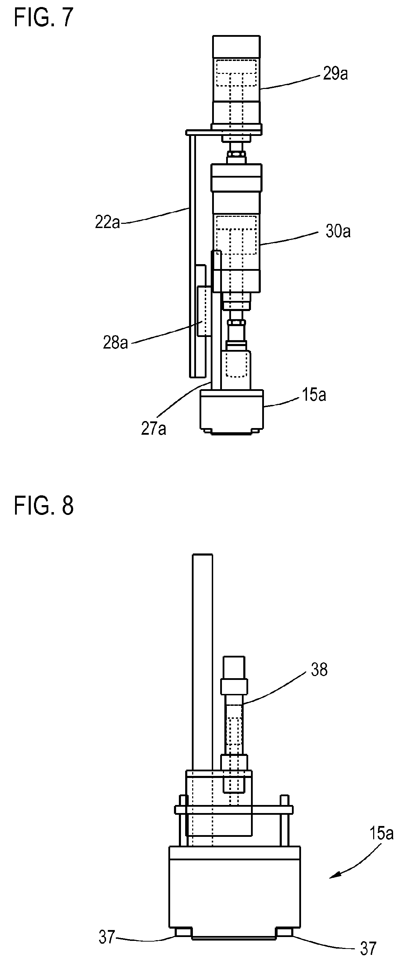

Fig. 7 zeigt in detaillierterer Form die relevanten Komponenten bezüglich der Kopplung der beiden Zylinder 29a, 30a. Ersichtlich hängt der Zylinder 30a direkt am Kolben des Zylinders 29a. Am Kolben des Zylinders 30a befindet sich wiederum das Spleißleistensegment 15a, das über die Linearführungen 28a linear beweglich über seinen zweiten Vertikalträger 27a am ersten Vertikalträger 22a geführt ist. Der erste Zylinder 29a ist am ersten Vertikalträger 22a oberseitig fixiert und schiebt mit seiner Kolbenstange den zweiten Zylinder 30a nach unten oder zieht ihn nach oben.

Fig. 8 zeigt schließlich eine Schnittansicht in Richtung der Linie VIII - VIII. Gezeigt ist hier das Spleißleistensegment 15a, an dem an beiden Längsseiten Abstreiferleisten 37 angeordnet sind. Diese dienen dazu, dass möglicherweise an dem Spleißleistensegment 15a anhaftende, klebrige Cordband nach dem Spleißen vom Spleißleistensegment 15a wegzudrücken. Sie sind über einen hydraulischen oder pneumatischen Stellzylinder 38 vertikal nach unten aus der Spleißleistenebene herausfahrbar. Auch in dieser Figur sind lediglich die relevanten Elemente gezeigt.

Nachfolgend wird anhand der Fig. 9a - c... 17a - c erläutert, wie ein vollständiger Spleißvorgang von Statten geht. Die mit "a" gekennzeichneten Figuren zeigt eine Seitenansicht der Spleißeinheit 14 nebst Stumpfspleißeinrichtung 17. Die mit "b" gekennzeichneten Figuren zeigen eine Aufsicht zur Darstellung der Positionen der einzelnen Spleißsegmente, wobei gestrichelt die soweit gegebenen Kantenverläufe gezeigt sind. Die mit "c" gekennzeichneten Figuren schließlich zeigen nur die gegebenen Kantenverläufe nebst Sensoriken. Alle Figuren sind reine Prinzipdarstellungen, es sind nur wesentlichen, für die Funktionserläuterung wichtige Komponenten gezeigt bzw. näher beschrieben. Jedes Figurentripel zeigt eine bestimmte, sich im Spließvorgang ergebende Situation.

Vorauszuschicken ist zunächst, dass die Spleißeinrichtung 1 selbstverständlich eine zentrale Steuerungseinrichtung 39 aufweist, die den gesamten Einrichtungsbetrieb steuert, also einerseits sämtliche Stellelemente etc. ansteuert, wie natürlich auch die entsprechenden Fördereinrichtungen etc. Unter anderem werden der Steuerungseinrichtung 39 die Positionserfassungssignale zweier unterschiedlicher Sensoriken gegeben, wie sie dem Grunde nach in Fig. 9 erstmals gezeigt sind. Vorgesehen ist eine erste Sensorik 40 umfassend im gezeigten Ausführungsbeispiel mit insgesamt elf einzelnen Transportbändern 2a zehn optische Sensoren 41, die oberhalb der ersten Fördereinrichtung 2 jeweils zwischen zwei Transportbändern 2a angeordnet sind. Sie sind in einer geraden Linie angeordnet, siehe Fig. 9b. Die Sensoren 41 sind an der Mechanik, über die die einzelnen Transportbänder 2a in ihrer Länge der Obertrumme zur Einstellung des Winkels der Übergangszone 4 veränderbar sind, angeordnet. Somit verlaufen die Sensoren 41 bzw. die Sensorlinie immer im wesentlichen parallel zu dieser eingestellten Winkellinie. Über diese Sensoren 41, deren Ausrichtlinie letztlich parallel zur eigentlichen Spleißlinie, sofern diese nicht zu verstellen ist, läuft, wird sowohl die nachlaufenden Kante 45 des abgezogenen, fertiggespleißten Cordbandes erfasst, als auch die vorlaufende Kante 48 des einlaufenden Cordbandabschnitts. Denn die beiden Kanten laufen jeweils unter den Sensoren 41 durch, so dass diese mit dem Durchlauf der Kante jeweils individuelle Signale geben. Da die Fördergeschwindigkeit bekannt ist, kann folglich ermittelt werden, wo sich der jeweils detektierte Kantenpunkt befindet, wenn nachfolgend die Fördereinrichtung 2 gestoppt wird. Es liegen dann also zehn dezidierte Positionsinformationen von den zehn Sensoren 41 vor, die jeweils genau die jeweilige räumliche Position des detektierten Kantenpunktes angeben. Anhand dieser zehn Kantenpositionen kann sodann seitens der Steuerungseinrichtung 39 der konkrete Verlauf der jeweils erfassten Kante, sei es der nachlaufenden Kante, sei es der vorlaufenden Kante, zumindest näherungsweise, jedoch hinreichend gut aufgelöst, erfasst werden. Es werden hierüber also genaue Kantenpositioneninformationen erfasst.

Vorgesehen ist ferner eine zweite Sensorik 42 umfassend einen Längskantensensor 43, der die Längskante des gespleißten, abgeförderten Cordbandstreifens wie auch die Längskante des herangeförderten, anzuspleißenden Cordbandabschnitts erfasst. Sind die beiden Längskantenpositionen bekannt, kann ein seitlicher Versatz zwischen beiden ermittelt werden. D. h., dass über die beiden Sensoriken 40, 42 einerseits der konkrete Kantenversatz zwischen vorlaufender und nachlaufender Kante, andererseits der jeweilige Längskantenversatz bestimmt werden kann. Dies vorausgeschickt arbeitet die Spleißvorrichtung wie folgt:

Die Fig. 9a - c zeigen die Situation nach dem Abtransport eines zuvor gespleißten Cordbands 44. Dieses Cordband 44 wird, wie durch den Pfeil in Fig. 9c dargestellt ist, von rechts nach links bewegt. Es weist eine nachlaufende Kante 45 auf, die, siehe Fig. 9c, leicht bogenförmig ist. In den Fig. 9b und 9c ist jeweils die Sensorik 40 mit den einzelnen optischen Sensoren 41 gezeigt. Ersichtlich wird die nachlaufende Kante 45 während des Abtransports unter dieser Sensorik 40 durchgezogen. Jeder Sensor 41 detektiert einmal den Durchlauf eines bestimmten Kantenpunktes, so dass insgesamt zehn Durchlaufsignale gegeben sind. Die Fördereinrichtungen transportieren das Cordband 44 noch ein kurzes Stück, aus der Fördergeschwindigkeit und dem Anhaltezeitpunkt kann genau errechnet werden, wo sich jeder einzelne über einen Sensor 41 erfasste Kantenpunkt nun im Stoppfall befindet.

Auch die Sensorik 42 mit dem Kantensensor 43 hat die unterhalb durchlaufende Längskante 46 des Cordbands 44 erfasst, so dass steuerungseitig auch genaue Kenntnis hinsichtlich dieser Längskantenposition gegeben ist.

Wie Fig. 9a zeigt, befindet sich die Spleißeinheit 14 in Arbeitsposition, die Stumpfspleißeinrichtung 17 ist in Ruheposition. Ersichtlich sind die Zylinder 36 abgesenkt, so dass die Spleißleistensegmente 15 benachbart und oberhalb der nachlaufenden Kante 45 sind.

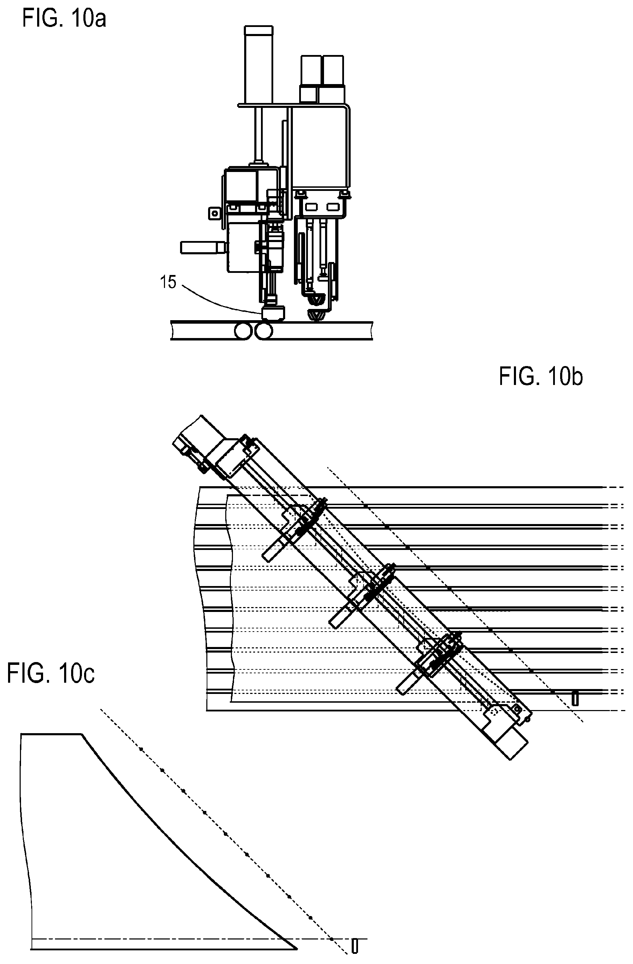

Im nächsten Schritt, siehe die Fig. 10a - 10c, werden nun durch gemeinsamen Betrieb sämtlicher Stellzylinder 29a, 30a - 29d, 30d die vier Spleißleistensegmente 15a - 15d abgesenkt und auf dem Cordband 44 im Bereich der nachlaufenden Kante 45 aufgesetzt. Zeitgleich erfolgt das Ansaugen, es wird also über den Tragbalken 20 und die Spleißleistensegmente 15a - d mittels der Pumpe 60 Luft abgesaugt, so dass das Cordband 44 im Bereich der Kante 45 unten an die Spleißleistensegmente 15a - d angesaugt wird. Ansonsten ändert sich an der Grundkonstellation (vgl. die Fig. 9b - 10b bzw. 9c - 10c) im Moment nichts.

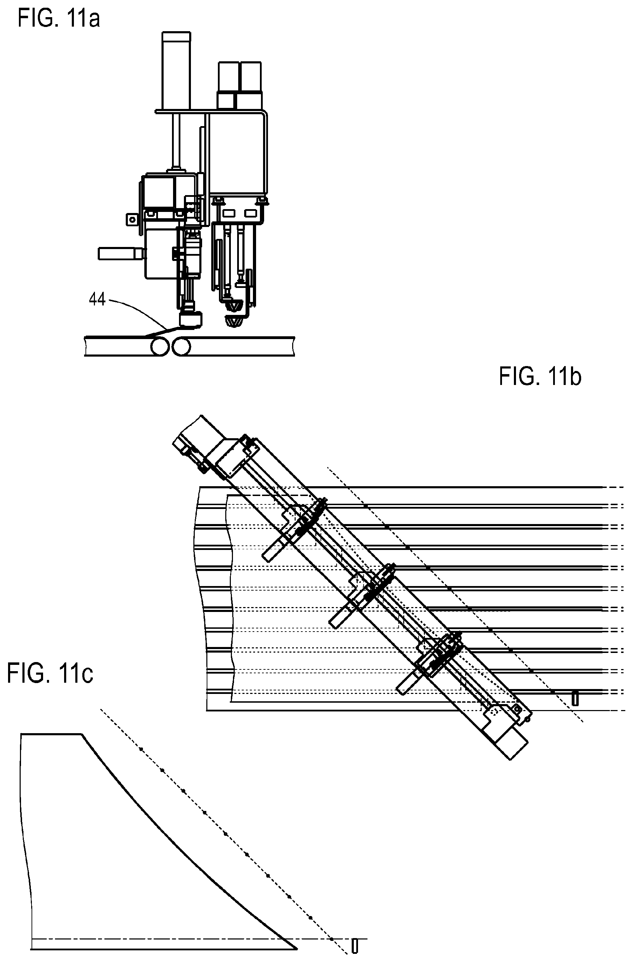

Im nächsten Schritt, siehe die Fig. 11a - c, fährt lediglich der jeweilige Zylinder 30a - 30d etwas nach oben, was dazu führt, dass - siehe Fig. 11a - das Cordband 44 kantenseitig etwas angehoben wird. Ansonsten ändert sich insoweit an der Spleißsegmentstellung etc. nichts.

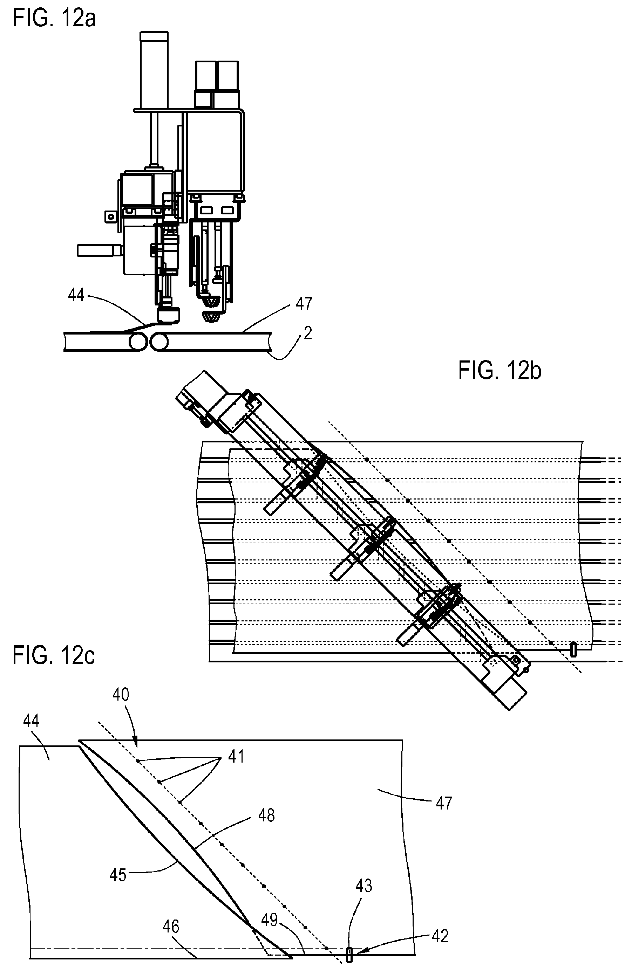

Im nächsten Schritt gemäß der Fig. 12a - c wird nun allein über die erste Fördereinrichtung 2 der anzuspleißenden Cordbandstreifen 47 herangefördert. Dies ist ohne Weiteres möglich, als in Folge des Anhebens der Kante 45 des Cordbandes 44 dieses nicht mehr auf der ersten Fördereinrichtung 2 liegt, siehe Fig. 12a.

Aus Fig. 12c ergibt sich, dass die vorlaufende Kante 48 des Cordbandstreifens 47 ebenfalls unterhalb der Sensorik 40 mit der Vielzahl an einzelnen optischen Sensoren 41 durchgefördert wird. Bei Erfassung des Kantendurchlaufs gibt jeder Sensor 41 ein dezidiertes Erfassungssignal, so dass insgesamt zehn zeitlich gegebenenfalls unterschiedlich gegebene Sensorsignal vorliegen. In Verbindung mit der bekannten Fördergeschwindigkeit kann auch hier genau ermittelt werden, wo jeder erfasste Kantenpunkt nach Stopp der Fördereinrichtung 2 zu liegen kommt. Aus den zehn Positionsinformationen kann sodann steuerungseinrichtungsseitig wiederum näherungsweise der Kantenverlauf der vorlaufenden Kante 48 bestimmt werden.

Wie Fig. 12c zeigt, verlaufen ersichtlich die nachlaufende Kante 45 und die vorlaufende Kante 48 nicht linear, sondern beide sind leicht gebogen, so dass sich folglich kein sauberer Überlapp ergibt. Diese Bogenform ist seitens der Steuerungseinrichtung genau bekannt, soweit dies über die zehn Messpunkte, die zu jeder Kante ermittelt werden, aufgelöst werden kann. Selbstverständlich können auch deutlich mehr als zehn Sensoren verwendet werden, wie es natürlich auch möglich ist, eine entsprechende Kamera zu verwenden, die ein komplettes Einzelbild der jeweiligen Kante liefert, etc. In jedem Fall ist seitens der Steuerungseinrichtung zumindest näherungsweise die jeweilige Kantengeometrie bekannt, wie auch die Relativposition beider Kanten 45, 48 zueinander.

Des Weiteren erfasst die Sensorik 42 mit dem Längskantensensor 43 auch die Längskante 49 des Cordbandstreifens 47. Da steuerungseinrichtungsseitig nunmehr sowohl die Information zur Längskante 46 des bereits abgeförderten Cordbandes 44 bekannt ist, als auch die Position der Längskante 49 des anzuspleißenden Cordbandstreifens 47, kann folglich seitens der Steuerungseinrichtung 39 ein etwaiger Längskantenversatz, also ein Seitenversatz der beiden Bänder zueinander, bestimmt werden. Im gezeigten Ausführungsbeispiel ist ein solcher Seitenversatz gegeben, siehe Fig. 12c.

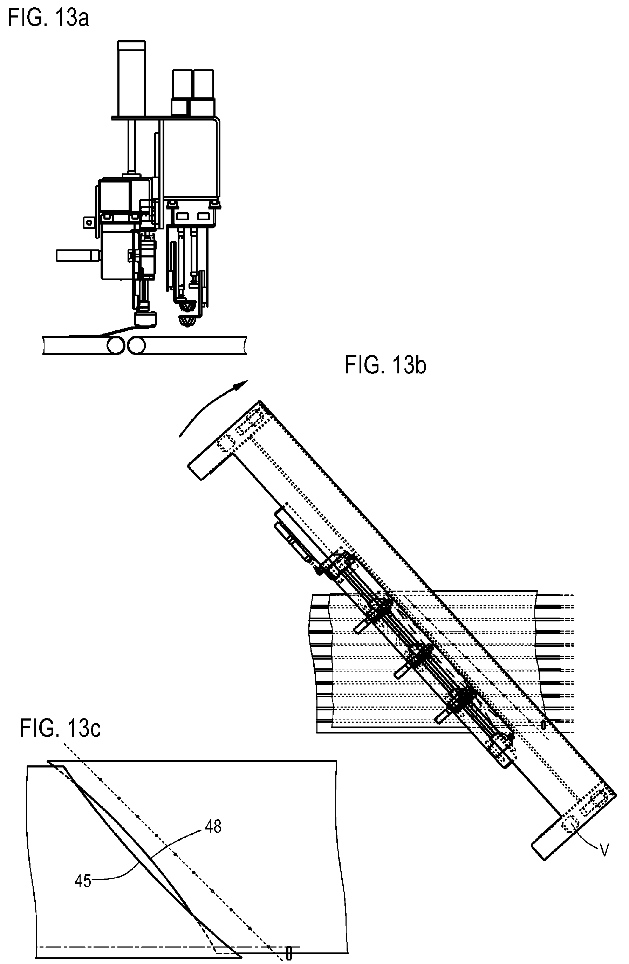

Die nächsten Schritte, die bevorzugt simultan durchgeführt werden, sind in den Fig. 13a - c bis 15a - 15c näher dargestellt, sie werden nachfolgend nacheinander beschrieben, laufen jedoch bevorzugt synchron ab.

Die Steuerungseinrichtung 39 errechnet nun anhand der ihr vorliegenden Positionsinformationen zu den beiden Kanten 45 und 48 sowie den Längskanten 46 und 49 Stell- oder Steuerinformationen zu sämtlichen relevanten Bewegungen, die für eine exakte Kantenausrichtung notwendig sind. Grundsätzlich erfolgt die Ausrichtung des gespleißten Cordbands 44 relativ zum anzuspleißenden Cordbandstreifen 47. Dies geschieht dadurch, dass soweit erforderlich die entsprechenden Stellelemente, seien es Servomotoren, seien es Elektromotoren, seien es Zylinder, entsprechend angesteuert werden.

Im ersten Schritt gemäß den Fig. 13a - 13c wird zunächst grob eine Kantenausrichtung vorgenommen, indem die Tragkonstruktion 6 über den Antrieb 11 um die Vertikalachse V minimal verschwenkt wird, siehe die Pfeildarstellung in Fig. 13b. Diese Verschwenkung führt dazu, dass die Kante 45 etwas weiter über die Kante 48 gezogen wird, siehe Fig. 13c im Vergleich zur Situation nach Fig. 12c. Der beachtliche, hier nur exemplarisch gezeigte Kantenversatz gemäß Fig. 12c wird dadurch bereits etwas reduziert. Dies erfolgt dadurch, dass die Steuerungseinrichtung anhand der jeweiligen Kantenpositionsinformationen zu jeder Kante eine virtuelle Linie ausrechnet und den Winkel zwischen diesen virtuellen Linien bestimmt. Über diese die gesamte Spleißeinheit bewegende, wenngleich geringe Schwenkbewegung werden nun diese beiden virtuellen Linien einander angenähert respektive zur Deckung gebracht. Dies ist ohne Weiteres möglich, als die Kante 45 bereits an den Spleißleistensegmenten 15a - d angesaugt ist, mithin also mit diesen zusammen während dieser Schwenkbewegung bewegt wird. Sind jedoch auch die Schwenkachsen 21a und 21e horizontal beweglich, so kann die oben durch Verschwenken der Tragkonstruktion 6 erreichte Ausrichtung allein durch entsprechende Bewegung der einzelnen Schwenkachsen 21 a - e erreicht werden. Die Tragkonstruktion 6 ist dann hierfür nicht zu bewegen.

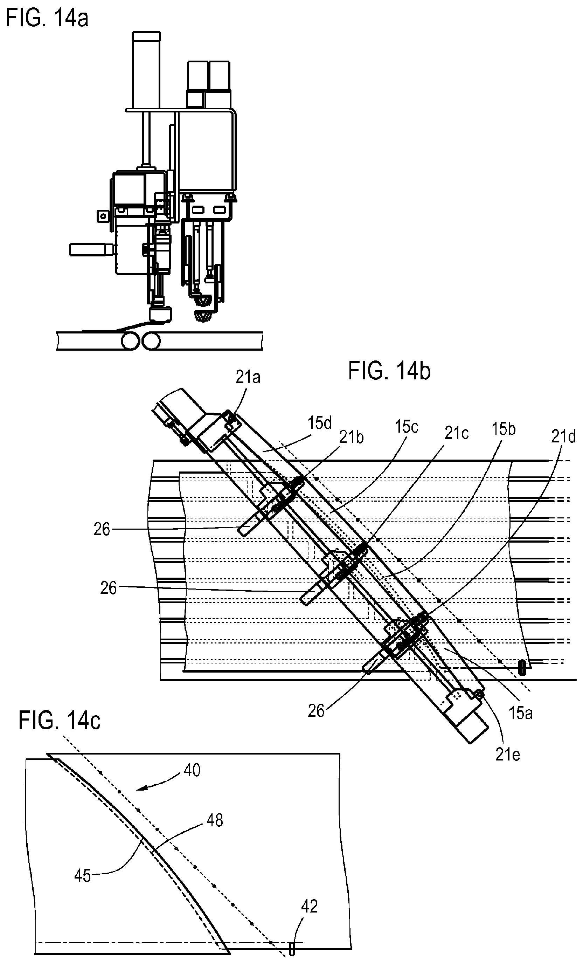

Im nächsten Schritt, wie er in den Fig. 14a - 14c dargestellt ist, wird die Kante 45 geometrisch dem Verlauf der Kante 48 angepasst. Dies erfolgt dadurch, dass die Steuerungseinrichtung nun die Stellelementen 26, die den einzelnen Schwenkachsen 21 b, c, d zugeordnet sind, ansteuert, so dass diese die jeweiligen Schwenkachsen horizontal um das geforderte Maß verschieben. Hierbei kommt es zwangsläufig zu einem Verschwenken der Spleißsegmente 15a - 15d relativ zueinander um die jeweiligen Schwenkachsen. Es ergibt sich, siehe Fig. 14b, eine leicht gebogene Form im Bereich der Spleißsegmente, die zwangsläufig auch seitens der Spleißleistensegmente 16a - 16d eingenommen wird. Da an ihnen die Kante 45 fixiert ist, wird folglich abhängig von der Spleißleistensegmentbewegung auch die Kante 45 individuell bewegt. Diese Bewegung findet nun vorteilhaft senkrecht zur Kantenrichtung an, nachdem die Schwenkachsen 21 b - d über die Stellelemente 26 senkrecht zur Kante 45 verschoben werden. Es wird also in optimaler Weise bezogen auf den Verlauf der Stahl- oder Textilcordfäden die Kantenkorrektur vorgenommen. Dabei erfolgt diese Bewegung soweit, bis die Kante 45 eine Form aufweist, die näherungsweise der Form der Kante 48 entspricht. Sie wird soweit bewegt, bis sie - siehe Fig. 14c - die Kante 48 über die gesamte Kantenlänge näherungsweise gleichförmig weit überlappt. Ersichtlich sind, siehe Fig. 14c, die beiden Kanten nahezu gleichverlaufend, jedoch überlappend. Gegeben ist jedoch nach wie vor ein kleiner seitlicher Kantenversatz.

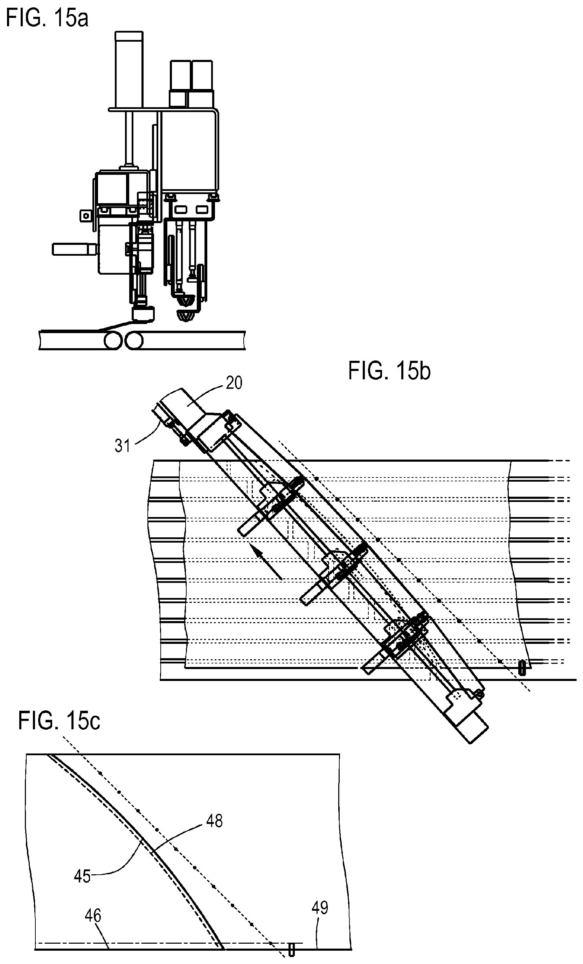

Dieser wird nun im nächsten Schritt, siehe die Fig. 15a - c, korrigiert. Da dieser Kantenversatz bekannt ist, und er sich letztlich während der vorangehenden Verschwenkbewegung in nachvollziehbarer, bekannter Weise geändert hat, wird nun durch Ansteuerung des Stellelements 31 die gesamte Spleißeinheit längs des Tragbalkens 20, geführt über die Linearführungen 19, linear verschoben, wie in Fig. 15b durch den Pfeil gezeigt ist. Diese Verschiebung geschieht solange, bis die Längskante 46 exakt mit der Längskante 49 fluchtet. Nun ist die ideale Kantenausrichtung beendet. Ersichtlich liegen nun, siehe Fig. 15c, die beiden Kanten 45 und 48 ideal positioniert miteinander wie auch die beiden Längskanten 46 und 49 exakt miteinander fluchten.

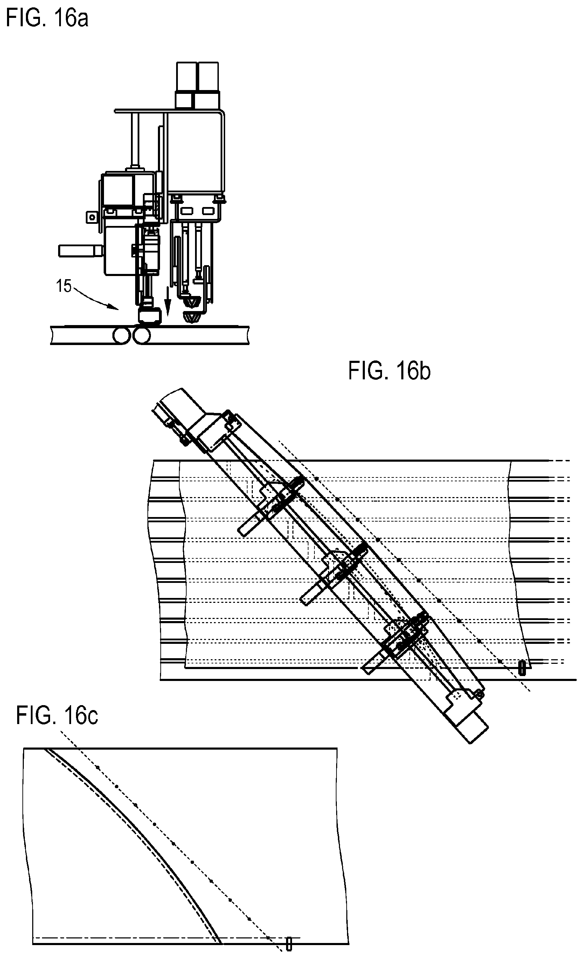

Im nächsten Schritt wird nun der Spleißvorgang vorgenommen, siehe Fig. 16a - 16c. Die zuvor angehobenen Spleißleistensegmente 15a - 15d der Spleißleiste 15 werden nun durch Aktion der Zylinder 30a - 30b abgesenkt. Dies führt dazu, dass die Kante 45 auf die Kante 48 gedrückt wird und das Gummimaterial fest miteinander verpresst wird. Die Ausrichtung der Kanten zueinander ändert sich hierbei natürlich nicht, da die zuvor zu Ausgleichszwecken verstellten Spleißsegmente wie auch die gegebenenfalls linearverschobene Spleißeinheit als solche ihre eingenommene Ausgleichsgeometrie nicht ändern. Es erfolgt lediglich die Vertikalbewegung der Spleißleistensegmente 16a - d zur Durchführung des Spleißes.

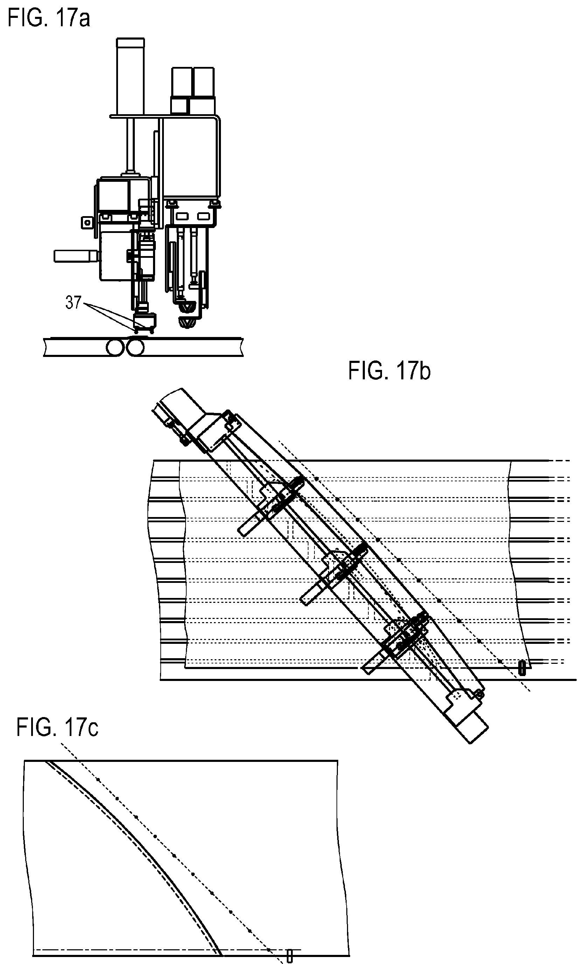

Ist der Spleißvorgang abgeschlossen, so werden zunächst sämtliche Spleißleistensegmente 16a - 16d wieder hochgefahren, sie sollen sich vom gespleißten Cordband lösen. Gleichzeitig hierzu werden die Abstreiferleisten 37 nach unten gefahren, siehe Fig. 17a, um nach Abschalten des Vakuums das möglicherweise an der Unterseite der Spleißleistensegmente angeklebende Cordband abzustreifen. Die Spleißleistensegmente 15a - d werden durch Interaktion beider Zylinder 29a, 30a,... 29d, 30d relativ weit nach oben gezogen, da anschließend das gespleißte Cordband mit hoher Geschwindigkeit unter der Spleißeinheit durchgezogen wird und ein hinreichender Abstand im Hinblick auf eine etwaige Welligkeit des Bandes benötigt wird, um ein Anschlagen zu vermeiden.

Gleichzeitig mit dem Hochfahren fahren auch die Spleißsegmente 15a - d wieder in eine Grundstellung zurück, d. h., sämtliche Winkelverstellungen etc., seien es solche bezüglich der Spleißsegmente 15a - d selbst, seien es solche, bezüglich der Linearbewegung der Spleißsegmente 15a - d, werden wieder zurückgenommen, die Spleißeinheit 14 geht in die in den Fig. 9a - c gezeigte Grundstellung zurück. Lediglich das gespleißte Cordband ruht noch auf den beiden Fördereinrichtungen 2, 3. Es wird nun mit hoher Geschwindigkeit abgefördert und, ausgehend von Fig. 17c, nach links verfahren. Hierbei kommt es zwangsläufig, wie bereits bezüglich Fig. 9a - c beschrieben, zu einem Durchlauf der dann neuen nachlaufenden Kante 45 des Cordbands 44 durch die Sensorik 40, die Kantenpositionserfassung der nachlaufenden Kante erfolgt von neuem, mit sich dann anschließenden Schritten gemäß den weiteren Fig. 10 - 17.

Die Fig. 18 und 19 zeigen in einer Seitenansicht die wesentlichen Komponenten der Spleißvorrichtung, wie zuvor beschrieben. Gemäß Darstellung in Fig. 18 befindet sich die Spleißeinheit 14 in Arbeitsposition oberhalb den beiden zu verspleiβenden Kanten 45 und 48. Der Spleißvorgang erfolgt wie ausgeführt oberhalb der ersten Transporteinrichtung 2. Die Stumpfspleißeinrichtung 17 befindet sich in Ruhestellung.

Soll jedoch auf der erfindungsgemäßen Vorrichtung stumpf gespleißt werden, so wird über die Stellzylinder 36 die gesamte Spleißeinheit 14 vertikal nach oben gezogen, siehe Fig. 19. Gleichzeitig wird über den oder die Stellzylinder 10 der Horizontalträger 7 nach links bewegt. Dies führt dazu, dass die Spleißeinheit 14 aus der Arbeits- in die Ruheposition bewegt wird, gleichzeitig wird die damit gekoppelte Stumpfspleißeinrichtung 17 in die Arbeitsposition gebracht. Die Stumpfspleißeinrichtung 14 weist im gezeigten Beispiel zwei Kegelradpaare 50, 51 auf, die dann die beiden Kanten 45 und 48, die nun jedoch stumpf aneinanderliegen, verspleißen.

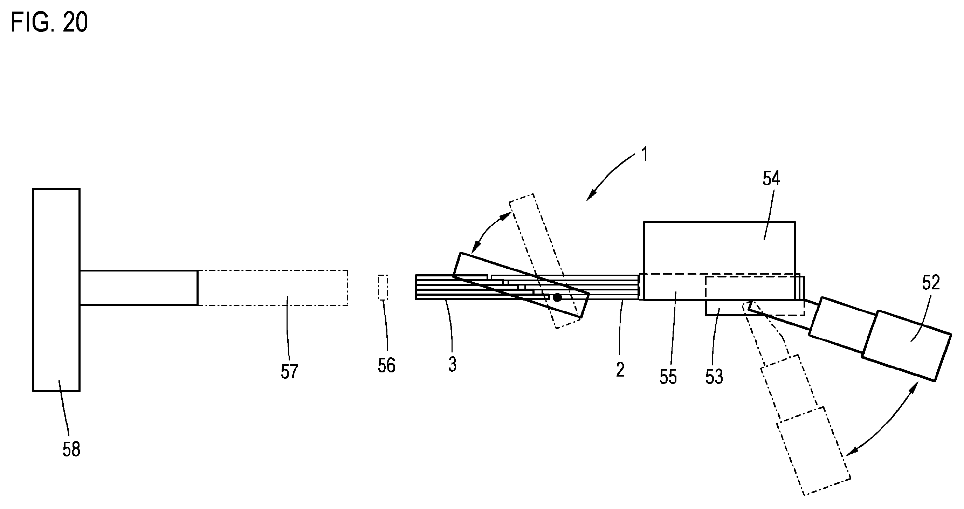

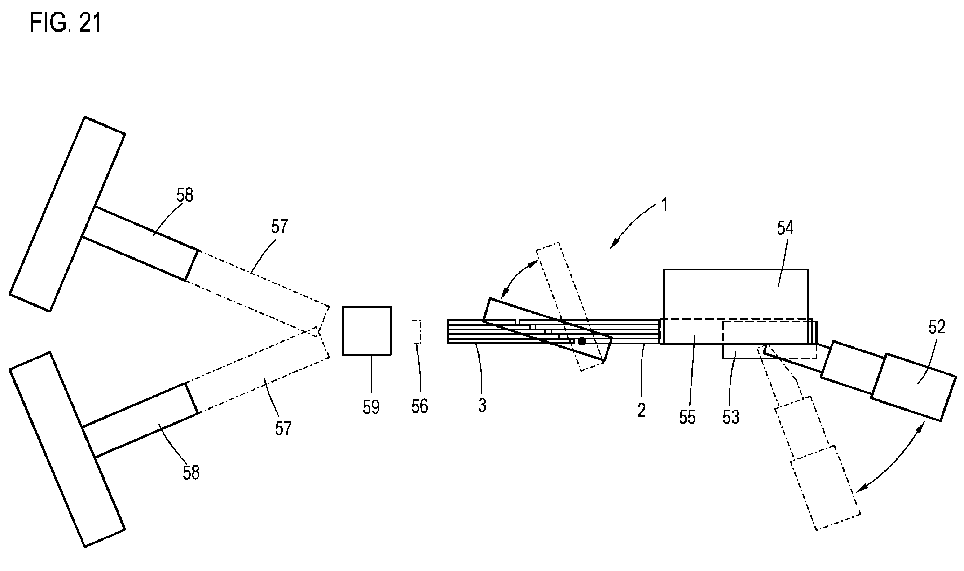

Die erfindungsgemäße Spleißvorrichtung kann in Verbindung mit unterschiedlichen vor- und nachgeschalteten weiteren Baugruppen, wie sie zum Verarbeiten derartiger Cordbandstreifen dienen, zu einer Arbeitsstraße kombiniert werden. Die Fig. 20 und 21 zeigen zwei typische Layouts einer solchen Gesamtmaschine.

Gezeigt ist zum einen die erfindungsgemäße Spleißvorrichtung 1 mit der ersten Fördereinrichtung 2 und der zweiten Fördereinrichtung 3. Die zu spleißenden Cordbandstreifen werden von einem Abwickler 52, der je nach gewünschter Schnittstellung mittels einer nachgeschalteten Schere 53 winkelverstellt werden kann, wie in Fig. 20 gezeigt, abgewickelt. Im Abwickler werden die zu verarbeitenden Materialrollen eingehängt und ausgewickelt. Hierbei wird die zu verarbeitende gummierte Cordbahn von einer Zwischenlage (Folie, Leinen oder Ähnliches) getrennt. Diese Zwischenlage wird verwendet, um das Verkleben der gummierten Materialbahn zu verhindern. Um verschiedene Schneidwinkel zu realisieren, kann wie ausgeführt der Abwickler 52 geschwenkt werden, was jedoch nicht zwingend erforderlich ist. Es gibt unterschiedliche Ausführungsformen hinsichtlich eines solchen Abwicklers. Bekannt sind Einfachabwickler, in die eine Materialrolle eingehängt werden kann. Bei einem Doppelabwickler mit Drehtisch sind zwei Materialrollen zum Einhängen, eine davon wird verarbeitet, eine davon gewechselt. Daneben ist ein Doppelabwickler mit Shuttlerrahmen zum Einhängen von zwei Materialrollen bekannt, eine wird verarbeitet, eine davon gewechselt. Weiterhin sind Kassettenabwickler bekannt, in denen eine Materialrolle in eine Kassette gehängt wird und die Kassette sodann in den Abwickler transportiert wird. Diese Aufzählung ist nicht abschließend.

Dem Abwickler 52 folgt wie ausgeführt die Schere. Der Scherentisch ist mit dem Abwickler 52 verbunden und schwenkt im Bedarfsfall gemeinsam mit dem Abwickler 52. Das zu verarbeitende Material liegt auf dem Scherentisch und wird auf diesem liegend in die Schere gezogen. Am Anfang des Tisches oder darüber befindet sich sehr häufig eine Fördereinrichtung, die den Materialanfang in die Schere transportiert, z. B. eine angetriebene Förderrolle. Dies ist immer dann notwendig, wenn die Maschine komplett entleert ist und der Anfang einer neuen Materialrolle in die Schere 53 eingelegt werden muss, oder falls zum Schwenken des Abwicklers das Material ein Stück weit aus der Schere 53 zurückgezogen wurde.

Die Schere 53 dient zum Abschneiden von Cordbandstreifen in einer definierten Breite und einem definierten Winkel. Als Schere werden verschiedene Typen verwendet. Beispielsweise eine sogenannte Guillotine-Schere mit feststehendem Untermesser und auf- und abfahrendem Obermesser. Bekannt sind ferner Rundmesserscheren mit einem Langmesser und einem daran entlangfahrenden Rundmesser. Weiterhin sind Scheren mit schnell rotierenden Sägemessern, bekannt.

Der Schere folgt ein Rückzug 54. Er dient zum Fördern der Materialbahn in die Schere, wie zuvor beschrieben. Die Schere 53 weist ferner ein Transportband 55 auf, das den geschnittenen Cordbandstreifen aufnimmt und ihn aus der Schere 53 transportiert. Ein solcher Förderer kann als einzelner Bandgurt, in Form mehrerer Bandgurte oder in Form mehrerer Bandgurte mit einer zwischengeschalteten Hochhebeeinrichtung, wie z. B. aus EP 1 745 920 bekannt, ausgeführt sein.

Der Cordbandstreifen wird sodann auf die erste Fördereinrichtung 2 der erfindungsgemäßen Spleißvorrichtung gegeben, und der eigentlichen Spleißeinheit, sei es Stumpfspleißeinheit, sei es Überlappspleißeinheit, zugeführt. Diese erste Fördereinrichtung 2 kann grundsätzlich auch mit der Fördereinrichtung 55, die der Schere 53 zugeordnet ist, zusammenfallen. D. h., dass sich zwischen dem eigentlich Spleißer und der Schere nur eine, bezogen auf die Spleißvorrichtung dann erste Fördereinrichtung befindet.

Der erfindungsgemäßen Spleißeinrichtung respektive ihrem zweiten Fördereinrichtung nachgeschaltet ist eine optional vorzusehende Beruhigungsrolle 56. Hierbei handelt es sich lediglich um eine angetriebene Rolle, die das Material, das von der Spleißvorrichtung 1 kommt, in die nächste Komponente transportiert. Hierbei erfährt das Material durch den Transport über die Rolle eine Gegenbiegung, durch die Gegenbiegung zieht sich das Material in Längsrichtung zusammen. Hintergrund ist somit die Dehnung des Materials in Längsrichtung bei der Verarbeitung in der erfindungsgemäßen Spleißvorrichtung 1 zu reduzieren. Diese Rolle ist jedoch nicht zwingend vorzusehen.

Gemäß Fig. 20 folgt sodann eine ebenfalls optionale Belegungsvorrichtung 57. In dieser Station werden auf die erzeugte Materialbahn noch weitere Gummistreifen, ein bis zwölf Stück, aufgelegt. Das Auflegen kann von oben und/oder von unten erfolgen. Des Weiteren werden häufig die Außenkanten der Materialbahn eingefasst, d. h. ein Gummistreifen wird von der Außenkante mit Überstand aufgelegt und um die Gummikante herumgelegt, um die an der Außenkante (= Schnittkante) freiliegenden Cordfäden zu ummanteln.

In jedem Fall vorgesehen ist ein Aufwickler 58. In dieser Station werden die erfolgten Materialbahnen wieder mit einer Zwischenlage, die das Verkleben verhindert, auf Spulen gewickelt. Auch hier gibt es verschiedene Ausführungsformen, die von recht einfachen Einfachaufwicklern, in denen das Material manuell abgeschnitten und an einer neuen Rolle aufgewickelt werden muss, bis hin zu vollautomatischen Aufwicklern, in denen für das Materialhandling keinerlei Bedieneingriffe notwendig sind, reichen.

Ein zweites Maschinenlayout ist in Fig. 21 gezeigt. Gleiche Komponenten sind mit gleichen Bezugszeichen versehen.

Neben Abwickler 52, Schere 53, Rückzug 54, Transportband 55 und erfindungsgemäßer Spleißvorrichtung 1 sowie der optionalen Beruhigungsrolle ist hier ein sogenannter Slitter 59 vorgesehen. Hierbei handelt es sich um eine Längsteilvorrichtung, d. h., die in der Spleißvorrichtung 1 erzeugte lange Materialbahn wird in zwei Streifen getrennt. Dies dient der Erhöhung des Ausstoßes einer Maschine, da bei einer solchen Ausgestaltung ein Scherenschnitt zu zwei fertigen Streifen in den beiden hier vorgesehenen Aufwicklern 58 führt. Als Slittermesser finden unter anderem Rundmesser Verwendung.

Dem Slitter 59 sind, optional, zwei Belegevorrichtungen 57 nachgeschaltet, in jedem Fall aber zwei Aufwickler 58.

Wenngleich in sämtlichen Darstellungen das Band von rechts nach links gefördert wird und folglich auch durch die erfindungsgemäße Spleißvorrichtung läuft, ist es selbstverständlich möglich, das Layout auch in umgekehrter, spiegelbildlicher Ausführung auszulegen, also den Streifen von links nach rechts zu transportieren.

## Patentansprüche

1. Vorrichtung zum Überlappspleißen von Cordband, umfassend eine erste Fördereinrichtung (2) zum Anfördern eines Cordbandstreifens, eine zweite Fördereinrichtung (3) zum Abfördern des gespleißten Cordbands, sowie eine Spleißeinheit (14) mit einer vertikal bewegbaren Spleißleiste zum überlappenden Spleißen der vorlaufenden Kante des angeförderten Cordbandstreifens (47) an die nachlaufende Kante des abgeförderten Cordbands (44), **dadurch gekennzeichnet, dass** die Spleißeinheit (14) mehrere in einer Reihe angeordnete Spleißsegmente (15a, 15b, 15c, 15d) mit jeweils einem zum Fixieren einer Kante (45) ausgebildeten Spleißleistensegment (16a, 16b, 16c, 16d) aufweist, wobei die Spleißsegmente (15a, 15b, 15c, 15d) relativ zueinander um senkrecht zur Cordbandebene stehende Schwenkachsen schwenkbar und mittels zugeordneter Stellelemente (26) in ihrer Stellung zueinander veränderbar sind.

2. Vorrichtung nach Anspruch 1, **dadurch gekennzeichnet, dass** zwei benachbarte Spleißsegmente (15a, 15b, 15c, 15d) miteinander um eine gemeinsame Schwenkachse (21b, 21c, 21 d) schwenkbar verbunden sind.

3. Vorrichtung nach Anspruch 1 oder 2, **dadurch gekennzeichnet, dass** die beiden äußeren Spleißsegmente (15a, 15d) um jeweils eine feste oder ebenfalls horizontal bewegbare Schwenkachse (21 a, 21 e) schwenkbar sind.

4. Vorrichtung nach einem der vorangehenden Ansprüche, **dadurch gekennzeichnet, dass** die Stellelemente (26) jeweils im Bereich der jeweiligen Schwenkachse (21 b, 21 c, 21 d) angreifen.

5. Vorrichtung nach Anspruch 4, **dadurch gekennzeichnet, dass** zwischen jeweils zwei Spleißsegmenten (15b, 15c, 15d) ein schwenkfester erster Träger (18b, 18c, 18d) angeordnet ist, an dem ein die Schwenkachse (21 b, 21 c, 21 d), mit der die beiden benachbarten Spleißsegmente (15b, 15c, 15d) verbunden sind, aufweisender und relativ zum ersten Träger (18b, 18c, 18d) über das Stellelement (26) horizontal bewegbarer zweiter Träger (24b, 24c, 24d) angeordnet ist.

6. Vorrichtung nach einem der vorangehenden Ansprüche, **dadurch gekennzeichnet, dass** die Stellelemente (26) Servomotore sind.

7. Vorrichtung nach einem der vorangehenden Ansprüche, **dadurch gekennzeichnet, dass** eine Sensorik (40) zur Erfassung der Position der nachlaufenden Kante (45) des abgeförderten Cordbands (44), vorzugsweise auch der vorlaufenden Kante (48) des angeförderten Cordbandstreifens (47) vorgesehen ist, wobei eine Steuerungseinrichtung (39) in Abhängigkeit der erfassten Positionsinformation näherungsweise den Verlauf der nachlaufenden Kante (45), vorzugsweise beider Kanten (45, 48) ermittelt und in Abhängigkeit der Ermittlungsergebnisses die Schwenkverstellung der Spleißsegmente (15a, 15b, 15c, 15d) nach Fixieren der nachlaufenden Kante (45) steuert.

8. Vorrichtung nach Anspruch 7, **dadurch gekennzeichnet, dass** die Sensorik (40) mehrere einzelne, vorzugsweise optische Sensoren (41), die in einer Linie über die Breite der ersten Fördereinrichtung (2), vorzugsweise äquidistant verteilt, angeordnet sind, umfasst.

9. Vorrichtung nach Anspruch 8, **dadurch gekennzeichnet, dass** die erste Fördereinrichtung (2) aus mehreren parallel verlaufenden, über einen gemeinsamen Antrieb bewegten Einzelbändern (2a) besteht, wobei entweder jedem Einzelband (2a) ein Sensor (41) zugeordnet ist, oder die Sensoren (41) zwischen zwei Einzelbändern (2a) positioniert sind.

10. Vorrichtung nach einem der vorangehenden Ansprüche, **dadurch gekennzeichnet, dass** jedes Spleißsegment (15a, 15b, 15c, 15d) einen ersten Vertikalträger (22a, 22b, 22c, 22d) aufweist, über den das Spleißsegment (15a, 15b, 15c, 15d) schwenkgelagert ist, und an dem ein das Spleißleistensegment (16a, 16b, 16c, 16d) tragender zweiter Vertikalträger (27a, 27b, 27c, 27d) über wenigstens ein Stellelement (29a, 29b, 29c, 29d, 301, 30b, 30c, 30d) vertikal bewegbar geführt ist.

11. Vorrichtung nach Anspruch 10, **dadurch gekennzeichnet, dass** als Stellelemente (29a, 29b, 29c, 29d, 301, 30b, 30c, 30d) pneumatisch, hydraulisch oder elektrisch arbeitende Hubzylinder vorgesehen sind.

12. Vorrichtung nach einem der Ansprüche 1 bis 9, **dadurch gekennzeichnet, dass** die Spleißsegmente (15a, 15b, 15c, 15d) an einem gemeinsamen Träger, der über wenigstens ein Stellelement vertikal bewegbar ist, angeordnet sind.

13. Vorrichtung nach einem der vorangehenden Ansprüche, **dadurch gekennzeichnet, dass** die Spleißeinheit (14) an einem Tragbalken (20) unter Beibehaltung der gegebenen räumlichen Stellung der Spleißsegmente (15a, 15b, 15c, 15d) über wenigstens ein Stellelement (31) längsverschiebbar angeordnet ist.

14. Vorrichtung nach Anspruch 13 und einem der Ansprüche 5 bis 12, **dadurch gekennzeichnet, dass** die ersten Träger (18a, 18b, 18c, 18d, 18e) an dem Tragbalken (20) über Linearführungen (19) bewegbar angeordnet sind.

15. Vorrichtung nach Anspruch 12 und 13, **dadurch gekennzeichnet, dass** der gemeinsame Träger an dem Tragbalken über ein Stellelement linear bewegbar angeordnet ist.

16. Vorrichtung nach einem der Ansprüche 13 bis 15, **dadurch gekennzeichnet, dass** eine Sensorik (42) zur Erfassung der Position der Längskante (46) des abgeförderten Cordbands (44) und der Längskante (49) des angeförderten Cordbandstreifens (47) vorgesehen ist, wobei die Steuerungseinrichtung (39) in Abhängigkeit der erfassten Positionsinformation den in der Spließstellung gegebenen Seitenversatz beider Längskanten (46, 49) im Bereich der zu verspleißenden Kanten ermittelt und in Abhängigkeit der Ermittlungsergebnisses die Linearverstellung der Spleißeinheit (14) nach Fixieren der nachlaufenden Kante (45) steuert.

17. Vorrichtung nach Anspruch 16, **dadurch gekennzeichnet, dass** die Sensorik (42) wenigstens einen, vorzugsweise optischen, Sensor (43) aufweist, unterhalb oder oberhalb dessen die Längskante (46, 49) vorbeiläuft.

18. Vorrichtung nach einem der vorangehenden Ansprüche, **dadurch gekennzeichnet, dass** jedes Spleißleistensegment (16a, 16b, 16c, 16d) zum Fixieren der Kante (45) mit einer Unterdruckerzeugungseinrichtung gekoppelt ist, oder dass jedes Spleißleistensegment (16a, 16b, 16c, 16d) zum Fixieren der Kante (45) mit wenigstens einem Magnetelement versehen ist.

19. Vorrichtung nach Anspruch 18 und einem der Ansprüche 13 bis 17, **dadurch gekennzeichnet, dass** der Tragbalken (20) hohl ist und mit der Unterdruckerzeugungseinrichtung einerseits und andererseits über Leitungen mit jedem Spleißleistensegment (16a, 16b, 16c, 16d) verbunden ist.

20. Vorrichtung nach einem der vorangehenden Ansprüche, **dadurch gekennzeichnet, dass** an jedem Spleißleistensegment (16a, 16b, 16c, 16d) ein- oder beidseitig eine, vorzugsweise druckluftgesteuert, vertikal bewegbar angeordnete Abstreiferleiste (37) vorgesehen ist.

21. Vorrichtung nach einem der vorangehenden Ansprüche, **dadurch gekennzeichnet, dass** eine Tragkonstruktion (6) vorgesehen ist, die über eine Antriebseinrichtung (11) um eine Vertikalachse (V) zur Einstellung des Spleißwinkels der Spleißeinheit (14) schwenkbar ist.

22. Vorrichtung nach einem der vorangehenden Ansprüche, **dadurch gekennzeichnet, dass** eine längs zweier zu verspleißender Kanten verfahrbare Stumpfspleißeinrichtung (17) vorgesehen ist, wobei die Spleißeinheit (14) und die Stumpfspleißeinrichtung (17) gemeinsam horizontal verfahrbar sind, derart, dass sie wechselweise von einer Ruhstellung in eine Arbeitsstellung, in der der Spleißbetrieb erfolgt, bringbar sind.

23. Vorrichtung nach Anspruch 22, **dadurch gekennzeichnet, dass** die Tragkonstruktion (6) einen zentralen Horizontalträger (7) und zwei Vertikalträger (8, 9) aufweist, wobei der Horizontalträger (7) auf den beiden Vertikalträgern (8, 9) horitontal bewegbar angeordnet ist.

24. Vorrichtung nach Anspruch 22 und 23, **dadurch gekennzeichnet, dass** die Stumpfspleißeinrichtung 817) horizontal verfahrbar an dem Horizontalträger (7) oder einer parallel zu diesem verlaufenden Führungsschiene angeordnet ist.

25. Vorrichtung nach Anspruch 23 oder 24, **dadurch gekennzeichnet, dass** die Spließeinheit (14) über ein oder mehrere Stellelemente (36) relativ zum Horizontalträger (7) vertikal bewegbar ist.

26. Vorrichtung nach einem der vorangehenden Ansprüche, **dadurch gekennzeichnet, dass** die Spleißeinheit (14), gegebenenfalls auch die Stumpfspleißeinheit (17), in der den Spleiß erwirkenden Arbeitsposition oberhalb der ersten Fördereinrichtung (2) angeordnet ist.

27. Verfahren zum Überlappspleißen von Cordband, bei dem unter Verwendung einer Vorrichtung (1) nach einem der vorangehenden Ansprüche mittels einer Spleißleiste (15) eine nachlaufende Kante (45) eines gespleißten Cordbands (44), die über eine vorlaufende Kante (48) eines angeförderten Cordbandstreifens (44) gelegt ist, an die vorlaufende Kante (48) gespleißt wird.

28. Verfahren nach Anspruch 27, **dadurch gekennzeichnet, dass** zumindest näherungsweise der geometrische Verlauf der nachlaufenden Kante (45) und der vorlaufenden Kante (48) sowie ihre Relativposition zueinander und die Lage der beiden Längskanten (46, 49) bestimmt wird, wonach die Steuerungseinrichtung (39) die die Verschwenkung der Spleißsegmente (15a, 15b, 15c, 15d) erwirkenden Stellelemente (26) und das die Linearverschiebung der Spleißsegmente (15a, 15b, 15c, 15d) erwirkende Stellelement (31) derart ansteuert, dass die an den Spleißleistensegmenten (16a, 16b, 16c, 16d) fixierte nachlaufenden Kante (45) unter Ausgleich eines etwaigen gegebenen axialen und lateralen Versatzes in eine Überlappposition gebracht wird, in der über die Kantenlänge ein weitgehend gleicher Überlapp gegeben ist, wonach das Verspleißen erfolgt.

29. Verfahren nach Anspruch 28, **dadurch gekennzeichnet, dass** anhand der ermittelten geometrischen Verläufe der Kanten (45, 48) zunächst eine erste Lageanpassung durch Verschwenken der gesamten Spleißeinheit (14) über die Antriebseinrichtung (11) um ein verlaufsabhängig bestimmtes Winkelinkrement erfolgt, wonach die Stellelemente (26, 31) im Rahmen einer zweiten Lageanpassung angesteuert werden.

30. Verfahren nach Anspruch 29, **dadurch gekennzeichnet, dass** die Lageanpassungen synchron erfolgen.

## Claims

1. Device for the overlapping splicing of cord tape, the device comprising a first conveying installation (2) for inwardly conveying a cord-tape strip, a second conveying device (3) for outwardly conveying the spliced cord tape, and a splicing unit (14) having a vertically movable splicing bar for the overlapping splicing of the leading edge of the inwardly conveyed cord-tape strip (47) to the trailing edge of the outwardly conveyed cord tape (44), **characterized in that** the splicing unit (14) has a plurality of splicing segments (15a, 15b, 15c, 15d) which are disposed in one row, each having one splicing-bar segment (16a, 16b, 16c, 16d) which is configured for fixing one edge (45), the splicing segments (15a, 15b, 15c, 15d) being pivotable in relation to one another about pivot axes which are perpendicular to the cord-tape plane, and being variable in the mutual position thereof by means of assigned actuator elements (26).

2. Device according to Claim 1, **characterized in that** two adjacent splicing segments (15a, 15b, 15c, 15d) are interconnected so as to be pivotable about a common pivot axis (21b, 21c, 21d).

3. Device according to Claim 1 or 2, **characterized in that** the two outer splicing segments (15a, 15d) are each pivotable about one fixed or likewise horizontally movable pivot axis (21a, 21e).

4. Device according to one of the preceding claims, **characterized in that** the actuator elements (26) each engage in the region of the respective pivot axis (21b, 21c, 21d).

5. Device according to Claim 4, **characterized in that** a pivotably fixed first support (18b, 18c,18d) is disposed between in each case two splicing segments (15b, 15c, 15d), a second support (24b, 24c, 24d) which by way of the actuator element (26) is horizontally movable in relation to the first support (18b, 18c, 18d) and which has the pivot axis (21b, 21c, 21d) to which the two adjacent splicing segments (15b, 15c, 15d) are connected being disposed on said pivotably fixed first support (18b, 18c, 18d).

6. Device according to one of the preceding claims, **characterized in that** the actuator elements (26) are servomotors.

7. Device according to one of the preceding claims, **characterized in that** a sensor system (40) for detecting the position of the trailing edge (45) of the outwardly conveyed cord tape (44), and preferably also of the leading edge (48) of the inwardly conveyed cord-tape strip (47), is provided, a controller installation (39), depending on the detected position-related information, approximately establishing the profile of the trailing edge (45), preferably of both edges (45, 48), and, depending on the established result, controlling the pivoting adjustment of the splicing segments (15a, 15b, 15c, 15d) after the trailing edge (45) has been fixed.

8. Device according to Claim 7, **characterized in that** the sensor system (40) comprises a plurality of preferably optical individual sensors (41) which are disposed so as to be distributed preferably so as to be equidistant in one line across the width of the first conveying installation (2).

9. Device according to Claim 8, **characterized in that** the first conveying installation (2) is composed of a plurality of individual belts (2a) which run in parallel and are moved by way of a common drive, either one sensor (41) being assigned to each individual belt (2a), or the sensors (41) being positioned between two individual tapes (2a).

10. Device according to one of the preceding claims, **characterized in that** each splicing segment (15a, 15b, 15c, 15d) has a first vertical support (22a, 22b, 22c, 22d) by way of which the splicing segment (15a, 15b, 15c, 15d) is pivotably mounted, and on which a second vertical support (27a, 27b, 27c, 27d) which supports the splicing bar segment (16a, 16b, 16c, 16d) is guided so as to be vertically movable by way of at least one actuator element (29a, 29b, 29c, 29d, 301, 30b, 30c, 30d).

11. Device according to Claim 10, **characterized in that** pneumatically, hydraulically, or electrically operating lifting cylinders are provided as actuator elements (29a, 29b, 29c, 29d, 301, 30b, 30c, 30d).

12. Device according to one of Claims 1 to 9, **characterized in that** the splicing segments (15a, 15b, 15c, 15d) are disposed on one support which is vertically movable by way of at least one actuator element.

13. Device according to one of the preceding claims, **characterized in that** the splicing unit (14) is disposed on a support beam (20) so as to be longitudinally traversable by way of at least one actuator element (31), while maintaining the given spatial position of the splicing segments (15a, 15b, 15c, 15d).

14. Device according to Claim 13 and one of Claims 5 to 12, **characterized in that** the first supports (18a, 18b, 18c, 18d, 18e) are disposed on the support beam (20) so as to be movable by way of linear guides (19).

15. Device according to Claims 12 and 13, **characterized in that** the common support is disposed on the support beam so as to be movable in a linear manner by way of an actuator element.

16. Device according to one of Claims 13 to 15, **characterized in that** a sensor system (42) for detecting the position of the longitudinal edge (46) of the outwardly conveyed cord tape (44) and of the longitudinal edge (49) of the inwardly conveyed cord-tape strip (47) is provided, the controller installation (39), depending on the detected position-related information, establishing the lateral offset of both longitudinal edges (46, 49) that in the splicing position is given in the region of the edges to be spliced, and, depending on the established result, controlling the linear adjustment of the splicing unit (41) after the trailing edge (45) has been fixed.

17. Device according to Claim 16, **characterized in that** the sensor system (42) has at least one preferably optical sensor (43), the longitudinal edge (46, 49) passing there below or there above.

18. Device according to one of the preceding claims, **characterized in that** each splicing bar segment (16a, 16b, 16c, 16d) for fixing the edge (45) is coupled to a negative-pressure generation installation, or **in that** each splicing bar segment (16a, 16b, 16c, 16d) for fixing the edge (45) is provided with at least one magnetic element.

19. Device according to Claim 18 and one of Claims 13 to 17, **characterized in that** the support beam (20) is hollow and is connected to the negative-pressure generation installation, on the one hand, and by way of lines to each splicing bar segment (16a, 16b, 16c, 16d), on the other hand.

20. Device according to one of the preceding claims, **characterized in that** a wiper bar (37) which is vertically movable, preferably by pneumatic control, is disposed on each splicing bar segment (16a, 16b, 16c, 16d), on one side or on either side thereof.

21. Device according to one of the preceding claims, **characterized in that** a support construction (6) which for adjusting the splicing angle of the splicing unit (14) by way of a drive installation (11) is pivotable about a vertical axis (V) is provided.

22. Device according to one of the preceding claims, **characterized in that** a butt-splicing installation (17) which is displaceable along two edges to be spliced is provided, the splicing unit (14) and the butt-splicing installation (17) being conjointly and horizontally displaceable in such a manner that they are alternatingly movable from a standby position to an operating position in which splicing is performed.

23. Device according to Claim 22, **characterized in that** the support construction (6) has a central horizontal support (7) and two vertical supports (8, 9), the horizontal support (7) being disposed on the two vertical supports (8, 9) so as to be horizontally movable.

24. Device according to Claims 22 and 23, **characterized in that** the butt-splicing installation (17) is disposed on the horizontal support (7), or on a guide rail running parallel thereto, so as to be horizontally displaceable.

25. Device according to Claim 23 or 24, **characterized in that** the splicing unit (14) by way of one or a plurality of actuator elements (36) is vertically movable in relation to the horizontal support (7).

26. Device according to one of the preceding claims, **characterized in that** the splicing unit (14), optionally also the butt-splicing unit (17), in the operating position effecting the splice, is/are disposed above the first conveying installation (2).

27. Method for the overlapping splicing of cord tape, in which method, using a device (1) according to one of the preceding claims, a trailing edge (45) of a spliced cord tape (44) which is placed over a leading edge (48) of an inwardly conveyed cord-tape strip (44) by means of a splicing bar (15) is spliced to the leading edge (48).

28. Method according to Claim 27, **characterized in that** the geometric profile of the trailing edge (45) and of the leading edge (48), as well as the mutually relative position thereof, and the position of the two longitudinal edges (46, 49) is established at least approximately, whereupon the controller installation (39) actuates those actuator elements (26) that cause pivoting of the splicing segments (15a, 15b, 15c, 15d) and that actuator element (31) that causes the linear traversing of the splicing segments (15a, 15b, 15c, 15d) in such a manner that the trailing edge (45) which is fixed to the splicing bar segments (16a, 16b, 16c, 16d) while equalizing any given axial and later offset is moved into an overlapping position in which a largely identical overlap exists across the length of the edge, whereupon splicing is performed.

29. Method according to Claim 28, **characterized in that** by means of the established geometric profiles of the edges (45, 48), a first positional adaptation is initially performed by pivoting the entire splicing unit (14) by way of the drive installation (11) about an angular increment which is determined so as to be dependent on the profile, whereupon the actuator elements (26, 31) are actuated in the context of a second positional adaptation.

30. Method according to Claim 29, **characterized in that** the positional adaptations are performed in a synchronous manner.

## Revendications

1. Dispositif d'épissage par chevauchement d'une bande de corde, comprenant un premier dispositif de transport (2) pour amener un ruban de bande de corde, un deuxième dispositif de transport (3) pour évacuer la bande de corde épissée, ainsi qu'une unité d'épissage (14) avec une barre d'épissage déplaçable verticalement pour l'épissage par chevauchement du bord avant du ruban de bande de corde amené (47) au bord arrière de la bande de corde évacuée (44), **caractérisé en ce que** l'unité d'épissage (14) présente plusieurs segments d'épissage (15a, 15b, 15c, 15d) disposés en une rangée, avec chaque fois un segment de barre d'épissage (16a, 16b, 16c, 16d) configuré pour la fixation d'un bord (45), dans lequel les segments d'épissage (15a, 15b, 15c, 15d) peuvent pivoter l'un par rapport à l'autre autour d'axes de pivotement perpendiculaires au plan de la bande de corde et peuvent être changés en position l'un par rapport à l'autre au moyen d'éléments de réglage associés (26).

2. Dispositif selon la revendication 1, **caractérisé en ce que** deux segments d'épissage voisins (15a, 15b, 15c, 15d) sont reliés l'un à l'autre de façon pivotante autour d'un axe de pivotement commun (21b, 21c, 21d).

3. Dispositif selon la revendication 1 ou 2, **caractérisé en ce que** les deux segments d'épissage extérieurs (15a, 15d) peuvent pivoter respectivement autour d'un axe de pivotement (21a, 21e) soit fixe soit également déplaçable horizontalement.

4. Dispositif selon l'une quelconque des revendications précédentes, **caractérisé en ce que** les éléments de réglage (26) agissent respectivement dans la région de l'axe de pivotement respectif (21b, 21c, 21d).

5. Dispositif selon la revendication 4, **caractérisé en ce qu'**un premier support non pivotant (18b, 18c, 18d) est chaque fois disposé entre deux segments d'épissage (15b, 15c, 15d), sur lequel est disposé un deuxième support (24b, 24c, 24d) présentant l'axe de pivotement (21b, 21c, 21d) avec lequel les deux segments d'épissage voisins (15b, 15c, 15d) sont reliés et déplaçable horizontalement par rapport au premier support (18b, 18c, 18d) au moyen de l'élément de réglage (26).

6. Dispositif selon l'une quelconque des revendications précédentes, **caractérisé en ce que** les éléments de réglage (26) sont des servomoteurs.

7. Dispositif selon l'une quelconque des revendications précédentes, **caractérisé en ce qu'**il est prévu des capteurs (40) pour détecter la position du bord arrière (45) de la bande de corde évacuée (44), de préférence aussi du bord avant (48) du ruban de bande de corde amené (47), dans lequel un dispositif de commande (39) détermine par approximation, en fonction de l'information de position détectée, l'allure du bord arrière (45), de préférence des deux bords (45, 48), et commande en fonction du résultat de la détermination le réglage de pivotement des segments d'épissage (15a, 15b, 15c, 15d) après la fixation du bord arrière (45).

8. Dispositif selon la revendication 7, **caractérisé en ce que** les capteurs (40) comprennent plusieurs capteurs individuels de préférence optiques (41), qui sont disposés en une ligne sur la largeur du premier dispositif de transport (2), de préférence en étant répartis à équidistance.

9. Dispositif selon la revendication 8, **caractérisé en ce que** le premier dispositif de transport (2) se compose de plusieurs bandes individuelles (2a) disposées parallèlement et déplacées par un entraînement commun, dans lequel soit un capteur (41) est associé à chaque bande individuelle (2a) soit les capteurs (41) sont disposés entre deux bandes individuelles (2a).

10. Dispositif selon l'une quelconque des revendications précédentes, **caractérisé en ce que** chaque segment d'épissage (15a, 15b, 15c, 15d) présente un premier support vertical (22a, 22b, 22c, 22d) par lequel le segment d'épissage (15a, 15b, 15c, 15d) est monté de façon pivotante, et sur lequel un deuxième support vertical (27a, 27b, 27c, 27d) portant le segment de barre d'épissage (16a, 16b, 16c, 16d) est guidé de façon déplaçable verticalement au moyen d'un élément de réglage (29a, 29b, 29c, 29d, 301, 30b, 30c, 30d).

11. Dispositif selon la revendication 10, **caractérisé en ce qu'**il est prévu comme éléments de réglage (29a, 29b, 29c, 29d, 301, 30b, 30c, 30d) des cylindres de levage opérant par voie pneumatique, hydraulique ou électrique.

12. Dispositif selon l'une quelconque des revendications 1 à 9, **caractérisé en ce que** les segments d'épissage (15a, 15b, 15c, 15d) sont disposés sur un support commun, qui est déplaçable verticalement au moyen d'au moins un élément de réglage.

13. Dispositif selon l'une quelconque des revendications précédentes, **caractérisé en ce que** l'unité d'épissage (14) est disposée sur une poutre de support (20) de façon déplaçable longitudinalement avec maintien de la position spatiale existante des segments d'épissage (15a, 15b, 15c, 15d) au moyen d'au moins un élément de réglage (31).

14. Dispositif selon la revendication 13 et l'une quelconque des revendications 5 à 12, **caractérisé en ce que** les premiers supports (18a, 18b, 18c, 18d, 18e) sont disposés sur la poutre de support (20) de façon déplaçable au moyen de guides linéaires (19).

15. Dispositif selon l'une quelconque des revendications 12 et 13, **caractérisé en ce que** le support commun est disposé sur la poutre de support de façon déplaçable linéairement au moyen d'un élément de réglage.

16. Dispositif selon l'une quelconque des revendications 13 à 15, **caractérisé en ce qu'**il est prévu des détecteurs (42) pour la détection de la position du bord longitudinal (46) de la bande de corde évacuée (44) et du bord longitudinal (49) du ruban de bande de corde amené (47), dans lequel le dispositif de commande (39) détermine, en fonction de l'information de position détectée, le décalage latéral existant des deux bords longitudinaux (46, 49) dans la position d'épissage dans la région des bords à épisser et commande, en fonction du résultat de la détermination, le réglage linéaire de l'unité d'épissage (14) après la fixation du bord arrière (45).

17. Dispositif selon la revendication 16, **caractérisé en ce que** les capteurs (42) présentent au moins un capteur (43), de préférence optique, en dessous ou au-dessus duquel le bord longitudinal (46, 49) défile.

18. Dispositif selon l'une quelconque des revendications précédentes, **caractérisé en ce que** chaque segment de barre d'épissage (16a, 16b, 16c, 16d) est couplé à un dispositif de production de dépression pour la fixation du bord (45), ou **en ce que** chaque segment de barre d'épissage (16a, 16b, 16c, 16d) est doté d'au moins un élément magnétique pour la fixation du bord (45).

19. Dispositif selon la revendication 18 et l'une quelconque des revendications 13 à 17, **caractérisé en ce que** la poutre de support (20) est creuse et est raccordée au dispositif de production de dépression d'une part et d'autre part par des conduites à chaque segment de barre d'épissage (16a, 16b, 16c, 16d).

20. Dispositif selon l'une quelconque des revendications précédentes, **caractérisé en ce qu'**il est prévu à chaque segment de barre d'épissage (16a, 16b, 16c, 16d), sur un côté ou sur les deux côtés, une barre de racleur (37) disposée de façon déplaçable verticalement, de préférence commandée par air comprimé.

21. Dispositif selon l'une quelconque des revendications précédentes, **caractérisé en ce qu'**il est prévu une construction de support (6), qui peut pivoter autour d'un axe vertical (V) au moyen d'un dispositif d'entraînement (11), pour le réglage de l'angle d'épissage de l'unité d'épissage (14).

22. Dispositif selon l'une quelconque des revendications précédentes, **caractérisé en ce qu'**il est prévu un dispositif d'épissage bout à bout (17) déplaçable le long de deux bords à épisser, dans lequel l'unité d'épissage (14) et le dispositif d'épissage bout à bout (17) sont déplaçables horizontalement en commun, de telle manière qu'ils puissent être amenés alternativement d'une position de repos à une position de travail, dans laquelle l'opération d'épissage est effectuée.

23. Dispositif selon la revendication 22, **caractérisé en ce que** la construction de support (6) présente un support horizontal central (7) et deux supports verticaux (8, 9), dans lequel le support horizontal (7) est disposé sur les deux supports verticaux (8, 9) d'une façon déplaçable horizontalement.

24. Dispositif selon la revendication 22 et 23, **caractérisé en ce que** le dispositif d'épissage bout à bout (17) est disposé d'une façon déplaçable horizontalement sur le support horizontal (7) ou sur un rail de guidage s'étendant parallèlement à celui-ci.

25. Dispositif selon la revendication 23 ou 24, **caractérisé en ce que** l'unité d'épissage (14) est déplaçable verticalement par rapport au support horizontal (7) au moyen d'un ou de plusieurs élément(s) de réglage (36).

26. Dispositif selon l'une quelconque des revendications précédentes, **caractérisé en ce que** l'unité d'épissage (14), éventuellement aussi l'unité d'épissage bout à bout (17), est disposée dans la position de travail opérant l'épissage au-dessus du premier dispositif de transport (2).

27. Procédé d'épissage par chevauchement d'une bande de corde, dans lequel, en utilisant un dispositif (1) selon l'une quelconque des revendications précédentes, on épisse au moyen d'une barre d'épissage (15) un bord arrière (45) d'une bande de corde épissée (44), qui est posé sur un bord avant (48) d'un autre ruban de bande de corde (44), au bord avant (48).

28. Procédé selon la revendication 27, **caractérisé en ce que** l'on détermine au moins par approximation l'allure géométrique du bord arrière (45) et du bord avant (48) ainsi que leur position relative l'un par rapport à l'autre et la position des deux bords longitudinaux (46, 49), puis le dispositif de commande (39) active les éléments de réglage (26) provoquant le pivotement des segments d'épissage (15a, 15b, 15c, 15d) et l'élément de réglage (31) provoquant le déplacement linéaire des segments d'épissage (15a, 15b, 15c, 15d), de telle manière que le bord arrière (45) fixé aux segments de barre d'épissage (16a, 16b, 16c, 16d) soit amené, avec neutralisation d'un éventuel décalage axial et latéral existant, dans une position de chevauchement, dans laquelle il existe un chevauchement largement égal sur la longueur des côtés, et on effectue ensuite l'épissage.

29. Procédé selon la revendication 28, **caractérisé en ce que**, à l'aide des allures géométriques des bords (45, 48) déterminées, on effectue d'abord une première adaptation de position par pivotement de l'unité d'épissage entière (14) au moyen du dispositif d'entraînement (11) à raison d'un incrément d'angle déterminé en fonction de l'allure, puis on active les éléments de réglage (26, 31) dans le cadre d'une deuxième adaptation de position.

30. Procédé selon la revendication 29, **caractérisé en ce que** l'on effectue les adaptations de position de façon synchrone.
